# EUROPEAN PATENT APPLICATION

(11) **EP 2 450 996 A1**
(43) Date of publication of application: **09.05.2012**
(21) Application number: 10793759.1
(22) Date of filing: 07.05.2010
(51) Int. Cl.: H01M 10/04, H01M 2/02, H01M 2/04, H01M 10/12

(54) **SECONDARY BATTERY HAVING ANTI-SCATTERING MECHANISM**

(30) Priority: 30.06.2009 JP 2009154875; 10.09.2009 JP 2009209583; 10.09.2009 JP 2009209584; 28.09.2009 JP 2009223251; 28.09.2009 JP 2009223252
(71) Applicant: Panasonic Corporation, Kadoma-shi Osaka 571-8501 (JP)
(72) Inventor: NISHINO, Hajime, Chuo-ku Osaka-shi OSAKA 540-6207 (JP); HIRAMATSU, Akitoshi, Chuo-ku Osaka-shi OSAKA 540-6207 (JP); OOTA, Takayuki, Chuo-ku Osaka-shi OSAKA 540-6207 (JP); YAMAGUCHI, Akihiko, Chuo-ku Osaka-shi OSAKA 540-6207 (JP); MAEDA, Akihiro, Chuo-ku Osaka-shi OSAKA 540-6207 (JP); SHIMADA, Mikinari, Chuo-ku Osaka-shi OSAKA 540-6207 (JP); GOTOU, Hiroaki, Chuo-ku Osaka-shi OSAKA 540-6207 (JP); TANO, Eiji, Chuo-ku Osaka-shi OSAKA 540-6207 (JP); ODA, Keizo, Chuo-ku Osaka-shi OSAKA 540-6207 (JP); HATA, Takayuki, Chuo-ku Osaka-shi OSAKA 540-6207 (JP)
(74) Representative: TBK
(86) International application number: PCT/JP2010/003135
(87) International publication number: WO 2011/001581

(57) **Abstract**

A housing for containing electrode assemblies and an electrolyte includes a cover 18 having a pair of long-side ends 18e. Peripheral thinned portions 11 are formed by cutting the inner face of a top plate 18a near the long-side ends 18e in parallel with the long-side ends 18e. A central thinned portion 15 is formed by cutting the central part of the outer face of the top plate 18a in parallel with the long-side ends 18e. This facilitates the rupture of a housing 1 due to an increase of the inner pressure, while ensuring the strength of the housing 1 to withstand external pressure.

## Description

### [Technical Field]

This invention relates to a secondary battery having an anti-scattering mechanism which suppresses scattering of pieces of the case and electrolyte when the secondary battery ruptures due to an increase of the inner pressure.

### [Background Art]

Secondary batteries such as lead-acid batteries, nickel cadmium batteries, nickel metal-hydride batteries, and lithium ion batteries can be used repeatedly if they are recharged. Thus, they are used widely as the power source for automobiles, the power source for portable electronic appliances, the power source for power storage equipment, etc. As the applications in which secondary batteries are used increase, improper use, such as using a wrong charging method or improper usage, also increases. Overcharge or reverse connection due to improper use may result in electrolyte leakage or battery rupture, depending on the kind of the secondary battery.

In particular, when secondary batteries are used as the power source for portable electronic appliances, it is common to use a battery pack comprising one or more secondary batteries packed in a case. A battery pack has a specific shape, capacity, etc. as the power source for a specific model, and the charger therefor incorporates functions for preventing overcharge and reverse connection according to the charge characteristics of the specific battery pack. Therefore, when secondary batteries are used in the form of a battery pack, the possibility of electrolyte leakage or rupture upon charge is very low.

On the other hand, for example, lead-acid batteries, nickel metal-hydride batteries, and nickel-cadmium batteries for use as car batteries are often required to provide versatility so that they can be used in various models, rather than being used in the form of a battery pack as the power source for a specific model. Thus, in order to avoid improper use of these secondary batteries such as overcharge or reverse connection, it is necessary to rely on a method such as calling attention by dearly indicating the charging method or how the batteries should be used on the battery case.

As such, it is preferable to provide secondary batteries such as lead-aad batteries with a mechanism for minimizing the damage when leakage of electrolyte or rupture of the case occurs due to improper use.
In connection therewith, PTL 1 proposes providing the cover of a case of a lead-acid battery with a thinned portion. According to this proposal, when the inner pressure increases, the thinned portion of the cover ruptures first, and therefore, the case is not destroyed extensively and scattering of pieces and electrolyte can be suppressed.

PTL 2 proposes covering a secondary battery with a net so that when the case of the secondary battery ruptures, scattering of pieces is prevented.
Also, PTL 3 proposes covering the upper face of a battery case with a plastic cover plate.

### [Citation List]

### [Patent Literature]

PTL 1: Japanese Unexamined Utility Model Publication No. Sho 63-135760
PTL 2: Japanese Unexamined Utility Model Publication No. Hei 4-55756
PTL 3: Japanese Laid-Open Patent Publication No. Sho 63-19752

### [Summary of Invention]

### [Technical Problem]

As proposed in PTL 1, when the cover of the case of the secondary battery is provided with the thinned portion, it is possible to suppress, to some extent, scattering of pieces and electrolyte due to extensive destruction of the case. However, unless the position of the thinned portion is appropriate, when the inner pressure increases at a very high speed (such as when an intemal explosion has occurred), the destruction may proceed further from the thinned portion, thereby making it impossible to prevent scattering of pieces and electrolyte.

Also, as proposed in PTL 2, when the secondary battery is covered with the net, it is possible to prevent scattering of pieces upon destruction of the case. However, since the net covering the secondary battery is coarse, it is difficult to prevent scattering of electrolyte due to destruction of the case.

Also, as proposed in PTL 3, when the upper face of case of the secondary battery is covered with the plastic cover, it is possible to prevent pieces and electrolyte from scattering upward upon destruction of the upper face of the case. However, since the destruction of the case occurs not only at the upper face but also at the side faces, it is not possible to prevent scattering of pieces and electrolyte from the side faces of the case.

Further, when the upper face of case of the secondary battery is covered with the plastic cover, electrolyte injection holes and electrode terminals, which are often disposed in and on the upper face of the case, are covered with the case.

In view of the problems described above, it is therefore an object of the invention to suppress scattering of pieces and electrolyte when the case of a secondary battery is destroyed due to an increase of the inner pressure.

### [Solution to Problem]

One aspect of the invention is directed to a secondary battery including: electrode assemblies each including a positive electrode, a negative electrode, and a separator, a liquid electrolyte; and a housing or battery case for containing the electrode assemblies and the electrolyte (i.e., the power generating elements). The housing includes: a rectangular battery container with an opening; a cover for dosing the opening; a liquid retaining portion below the level of the electrolyte, in which the electrolyte is retained; and a gas-retaining portion above the level of the electrolyte, in which a gas is retained. The cover has a pair of ends parallel to each other. The housing has an anti-scattering mechanism that suppresses scattering of pieces of the housing and the electrolyte when the housing ruptures due to an increase of inner pressure.

### [Advantageous Effects of Invention]

According to the invention, when the housing or battery case containing the power generating elements of a secondary battery is destroyed due to an increase of the inner pressure, it is possible to suppress scattering of pieces and electrolyte.

### [Brief Description of Drawings]

FIG. 1 is a perspective view of the appearance of a secondary battery according to one embodiment of the invention.
FIG. 2 is a sectional view of the cover illustrated in FIG. 1 taken along the line II-II;
FIG. 3 is a top view of the cover illustrated in FIG. 1;
FIG. 4 is a bottom view of the cover illustrated in FIG. 1;
FIG. 5 is a schematic sectional view of the cover of FIG. 3 to which an inner pressure is applied;
FIG. 6 is a schematic sectional view of the cover of FIG. 3 to which an external pressure is applied;
FIG. 7 is a perspective view of the appearance of a secondary battery according to another embodiment of the invention;
FIG. 8 is a perspective view of the appearance of a secondary battery according to still another embodiment of the invention;
FIG. 9 is a perspective view of the appearance of a secondary battery according to still another embodiment of the invention;
FIG. 10 is a sectional view of the cover illustrated in FIG. 9 taken along the line X-X;
FIG. 11 is a top view of the cover illustrated in FIG. 9;
FIG. 12 is a bottom view of the cover illustrated in FIG. 9;
FIG. 13 is a perspective view of the appearance of a secondary battery according to still another embodiment of the invention;
FIG. 14 is an exploded perspective view of the secondary battery of FIG. 13;
FIG.15 is a sectional view of the cover illustrated in FIG. 14 taken along the line XV-XV;
FIG. 16 is a schematic sectional view of the cover of a secondary battery in a Comparative Example of the invention;
FIG. 17 is a perspective view of the appearance of a secondary battery according to still another embodiment of the invention;
FIG. 18 is a partially cut-away perspective view of the intemal structure of the secondary battery illustrated in FIG. 17;
FIG. 19 is a plan view of an example of the anti-scattering member illustrated in FIG. 17;
FIG. 20 is a plan view of another example of the anfi-scattering member illustrated in FIG. 17;
FIG. 21 is a perspective view of the appearance of a secondary battery according to still another embodiment of the invention;
FIG. 22 is a perspective view of the appearance of a secondary battery according to still another embodiment of the invention;
FIG. 23 is a perspective view of an example of the anti-scattering members illustrated in FIG. 22;
FIG. 24 is a perspective view of the appearance of a modified example of the secondary battery illustrated in FIG. 22;
FIG. 25 is a perspective view of the appearance of a secondary battery according to still another embodiment of the invention;
FIG. 26 is a perspective view of the appearance of a secondary battery according to still another embodiment of the invention;
FIG. 27 is a perspective view of the appearance of a secondary battery according to still another embodiment of the invention;
FIG. 28 is a perspective view of the appearance of a secondary battery according to still another embodiment of the invention;
FIG. 29 is a perspective view of the appearance of a secondary battery according to still another embodiment of the invention;
FIG. 30 is a perspective view of the appearance of a secondary battery according to still another embodiment of the invention;
FIG. 31 is a perspective view of the appearance of a secondary battery according to still another embodiment of the invention;
FIG. 32 is a perspective view of the appearance of a secondary battery according to still another embodiment of the invention; and
FIG. 33 is a perspective view of the appearance of a secondary battery according to still another embodiment of the invention.

### [Description of Embodiments]

The secondary battery according to one embodiment of the invention is a secondary battery including electrode assemblies each including a positive electrode, a negative electrode, and a separator, a liquid electrolyte; and a housing (battery case) for containing the electrode assemblies and the electrolyte (power generating elements). The housing of the secondary battery has an anti-scattering mechanism that suppresses scattering of pieces of the housing and the electrolyte when the housing ruptures due to an increase of inner pressure. The housing includes: a rectangular (e.g., parallelepiped-shaped) battery container with an opening; and a cover for dosing the opening. The housing further has a liquid retaining portion below the level of the electrolyte, in which the electrolyte is retained; and a gas-retaining portion above the level of the electrolyte, in which a gas is retained. The cover has a pair of ends parallel to each other.

In the secondary battery according to another embodiment, the anti-scattering mechanism includes: a peripheral thinned portion comprising a groove formed in an inner face of the cover near at least one of the pair of ends; and a central thinned portion comprising a groove formed in an outer face of the cover at a position closer to the center of the cover than the peripheral thinned portion.

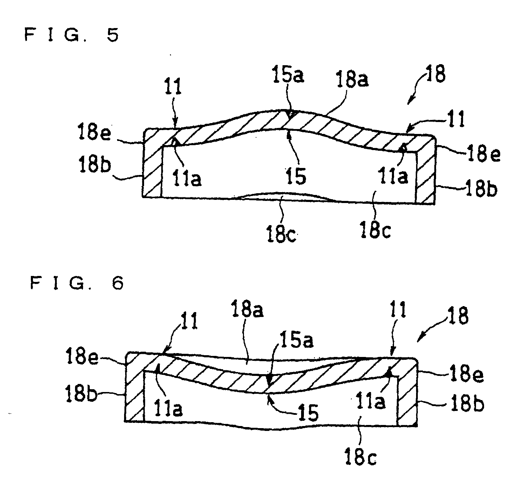

With this configuration, when the housing ruptures due to an increase of the inner pressure, the cover bends near the pair of ends so as to form a valley when viewed from above, while the cover bends at the central portion so as to form a mountain when viewed from above. This facilitates the rupture of the central thinned portion and the peripheral thinned portion (see FIG. 5). As such, before the energy of rupture becomes large, it is possible to cause the housing to rupture, thereby allowing the inner gas to be released to outside. Therefore, it is possible to decrease the energy of rupture, minimize the destruction of the housing, and suppress scattering of pieces and electrolyte.

In addition, since the peripheral thinned portion is dose to the end of the cover, it is unlikely to deform or rupture even when the housing is subjected to an external impact such as dropping. Also, since the central thinned portion is formed by cutting a groove in the outer face of the cover, it bends inward even when it is pressed from above, so that the stress exerted on the groove by the external force can be reduced. Therefore, the rupture of the housing is facilitated upon an increase of the inner pressure, but the housing is not easily destroyed by an external force.

Also, the peripheral thinned portion and the central thinned portion preferably comprise grooves formed in the flat portion of the cover. For example, in the case of a lead-add battery, the cover may have ribs on the inner face or may have projections around the electrode terminals and the electrolyte injection holes. It is pradically difficuft to form a thinned portion in such a rib or projection, and even if a thinned portion can be formed, it may not be sufficient for facilitating rupture.

In the secondary battery according to still another embodiment, the anti-scattering mechanism further includes an anti-scattering member in contact with an outer face of the housing for suppressing scattering of pieces of the housing and the electrolyte.
In this case, when pieces are produced due to rupture of the peripheral thinned portion and the central thinned portion or destruction of other portions of the housing, it is possible to prevent scattering of the pieces or decrease the scattering energy of the pieces. Also, by bringing other portions than the thinned portions in contact with the anti-scattering member, destruction of the other portions of the housing than the thinned portions can be suppressed, and a synergistic effect can be obtained in suppressing scattering of pieces and the like.

In the secondary battery according to still another embodiment, the anti-scattering member includes a sheet-like substrate and an adhesive layer formed on one face of the substrate, and the substrate is affixed to the outer face of the housing via the adhesive layer.
With this configuration, when pieces are produced due to rupture of the peripheral thinned portion and the central thinned portion and destruction of other portions of the housing, the pieces can be held due to the adhesive power of the adhesive layer, and scattering of the pieces and the like can be suppressed more effectively.

Further, the portion to which the anti-scattering member is affixed has increased strength, compared with simple contact. Thus, by affixing the anti-scattering member selectively to other portions than the peripheral thinned portion and the central thinned portion, it is also possible to cause only the peripheral thinned portion and the central thinned portion to rupture, while preventing the other portions from being destroyed. This can suppress production of pieces and further enhance the effect of suppressing scattering.

The substrate is preferably an elastic material. When the housing swells due to an increase of the inner pressure, the elastic substrate can stretch together with the swelling. It is thus possible to prevent the anti-scattering member from rupturing due to swelling of the housing before the thinned portion ruptures. Hence, the anti-scattering member can hold pieces in a more reliable manner.

The anti-scattering member can comprise a substrate and an adhesive layer as described above, and can also be an elastic endless belt or a wire.

In the secondary battery according to still another embodiment, the anti-scattering member is in contact with at least one of the peripheral thinned portion and the central thinned portion.
With this configuration, for example, when the anti-scattering member has a substrate and an adhesive layer, by affixing the anti-scattering member to the outer face of the cover so as to extend across the peripheral thinned portion, pieces produced by rupture of the peripheral thinned portion and the central thinned portion can be held by the adhesive force of the adhesive layer, while the peripheral thinned portion is allowed to bend so as to form a valley.

Also, if the central thinned portion is not brought into contact with the anti-scattering member and made free, this does not impede bending of the central thinned portion in the form of a mountain, which facilitates the rupture thereof, when the housing ruptures due to an increase of the inner pressure. As such, according to this embodiment, the effect of suppressing scattering by facilitation of rupture and the effect of suppressing scattering by the anti-scattering member can be produced synergistically.

When the anti-scattering member is brought into contact with the central thinned portion, it is preferable to bring the anti-scattering member into contact with only a part of the central thinned portion. If the anti-scattering member is in contact with the whole central thinned portion, the strength of the central thinned portion may become excessively high, so the effect of suppressing scattering by facilitation of rupture may not be obtained. Also, by bringing the anti-scattering member into contact with only a part of the central thinned portion, it is also possible to decrease the scattering energy of the pieces produced by rupture of the central thinned portion.

In the secondary battery according to still another embodiment, the anti-scattering mechanism includes: a peripheral thinned portion comprising a groove formed in an inner face of the cover near at least one of the pair of ends; and an anti-scattering member in contact with an outer face of the housing for suppressing scattering of pieces of the housing and the electrolyte. In this case, the anti-scattering member is preferably in contact with the peripheral thinned portion.

In the secondary battery according to still another embodiment, the anti-scattering mechanism is composed mainly of an anti-scattering member that is disposed near the housing for suppressing scattering of pieces of the housing and the electrolyte. The anti-scattering member has a gas permeable structure that prevents the electrolyte from passing therethrough while allowing a gas to pass therethrough.
With this configuration, when the housing ruptures upon a rapid increase of the inner pressure due to overcharge, reverse connection, or the like, the gas permeable structure allows the gas issuing from the secondary battery to be released, while suppressing scattering of electrolyte and pieces. It is thus possible to avoid destruction of the anti-scattering member itself by the energy of the gas issuing therefrom. As a result, scattering of electrolyte and pieces can be suppressed in a more reliable manner.

In this case, it is desirable to dispose the anti-scattering member near the gas-retaining portion. The gas-retaining portion is a portion in which an explosion or the like occurs when the inner pressure of the battery increases rapidly, and is therefore very susceptible to destruction. As such, by disposing the anti-scattering member near the gas-retaining portion, scattering of pieces and electrolyte can be suppressed more effectively.

The anti-scattering member can be at least one selected from the group consisting of non-woven fabric, woven fabric, net, porous material, and sponge. The non-woven fabric, woven fabric, net, porous material, or sponge can comprise at least one selected from the group consisting of polypropylene, polyethylene, polyamide, polyurethane, and glass fiber. The net can comprise at least one selected from the group consisting of nickel, copper, and iron.

The woven fabric or the net can have an opening of 0.01 to 3 mm and a fiber diameter of 0.001 to 10 mm. In this case, scattering of pieces and electrolyte can be suppressed effectively. Further, by setting the amount of water absorbed by the anti-scattering member to 0.005 g/cm² or more, most of the scattering electrolyte can be absorbed by the anti-scattering member. Therefore, scattering of electrolyte can be suppressed more effectively

The anti-scattering member preferably has a multi-layer structure. More preferably, the anti-scattering member comprises a laminate of a plurality of woven fabrics or nets, and openings of one of the woven fabrics or nets overlap intersections of another one of the woven fabrics or nets.
With this configuration, since the number of fibers increases not only in the plane direction of the anti-scattering member but also in the thickness direction, scattering of electrolyte can be suppressed more effectively.

Further, by bonding the anti-scattering member to the housing, even when pieces are produced, scattering of the pieces is prevented due to bonding of the anti-scattering member. It is thus possible to suppress scattering of pieces more effectively. Also, since the housing is reinforced due to bonding of the anti-scattering member, it is possible to prevent the housing from being destroyed more severely than necessary for releasing the inner gas to outside. As a result, production of large pieces can be prevented.

Further, the anti-scattering member can have a portion bonded to the housing and a portion not bonded to the housing, wherein the bonded portion is bonded to the liquid retaining portion and the non-bonded portion faces the gas-retaining portion. In this case, scattering of pieces and the like can be suppressed more effectively

As described above, the gas-retaining portion of the housing is a portion which is very susceptible to destruction when the inner pressure of the battery increases rapidly, whereas the liquid retaining portion is a portion which is not susceptible to destruction even when the inner pressure of the battery increases rapidly As such, by allowing the non-bonded portion of the anti-scattering member to face the gas-retaining portion and bonding the anti-scattering member to the liquid retaining portion, the destruction-free liquid retaining portion can support the anti-scattering member, and scattering of pieces produced from the gas-retaining portion can be suppressed. Therefore, scattering of pieces and the like can be suppressed more effectively

In the secondary battery according to still another embodiment, the anti-scattering mechanism is composed mainly of an anti-scattering member. The anti-scattering member includes a sheet-like substrate and an adhesive layer formed on one face of the substrate, and the substrate is affixed to an outer face of the housing via the adhesive layer. The adhesive strength between the anti-scattering member and the housing bonded by the adhesive layer at 23°C is preferably 12.5 to 20 N/25 mm. The anti-scattering member preferably has a rate of elongation before rupture of 30 to 125%.

By setting the adhesive strength by the adhesive in the above range, it is possible to suppress scattering of pieces by sufficient adhesive power, while facilitating the maintenance of the anti-scattering member such as replacement. By setting the elongation rate in the above range, it is possible to avoid rupture of the anti-scattering member due to the energy of rupture, while preventing the member from stretching too much and becoming too thin to hold pieces.

Further, when the anti-scattering member is a belt-like member, by disposing it so as to meander, it is possible to provide the anti-scattering member with some slack, thereby making the anti-scattering member more resistant to rupture.
Further, by providing at least one of the anti-scattering members so as to cover the intersection point of an upper face and adjacent two side faces of the housing, it is also possible to reinforce the corners of the housing and suppress the housing from being destroyed more severely than necessary.

In the secondary battery according to still another embodiment, the anti-scattering mechanism is composed mainly of an anti-scattering member, and the anti-scattering member is an elastic endless belt or a wire. Even when an anti-scattering member made of such a material is used, if its arrangement is appropriate, scattering of pieces and the like can be suppressed.

The invention is generally applicable to secondary batteries in which the positive electrode comprises lead dioxide, the negative electrode comprises lead, and the electrolyte comprises sulfuric acid.

Embodiments of the invention are hereinafter described in detail with reference to drawings.

### (Embodiment 1)

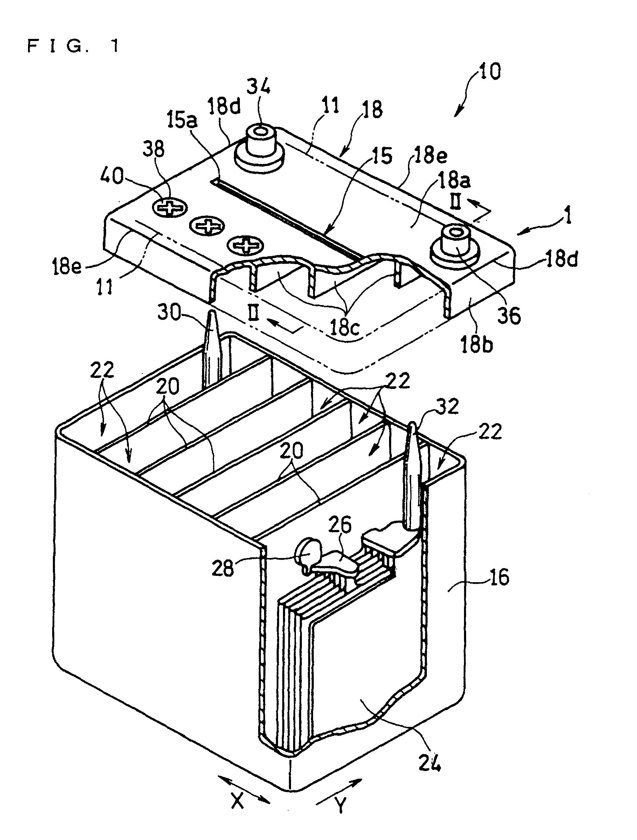

FIG. 1 is a perspective view of a secondary battery according to Embodiment 1 of the invention. In FIG. 1, a part of the battery container and cover is cut away so that the interior is visible.

A battery 10 illustrated therein includes a battery container 16 and a cover (seal member) 18 for dosing the opening of the battery container 16. The battery container 16 and the cover 18 constitute a housing 1 for housing power generating elements. The power generating elements include electrode assemblies 24 and a liquid electrolyte comprising, for example, a sulfuric acid aqueous solution (not shown). Each of the electrode assemblies 24 includes a positive electrode, a negative electrode, and a separator interposed therebetween.

The battery container 16 and the cover 18 are formed of an insulating material. Examples of such insulating materials include polypropylene, high-density polyethylene, polystyrene, acrylic resins, polystylene, and ABS resins.

A liquid electrolyte is usually injected into the battery container 16 so that the liquid level is 70 to 80% of the depth H of the battery container 16. Thus, the part of the housing 1 above the electrolyte level forms a gas-retaining portion in which gases such as air are retained. The gas-retaining portion is a portion in which an explosion or the like occurs when the housing 1 ruptures, since gases generated upon overcharge or reverse connection build up therein. Therefore, it is highly susceptible to destruction. On the other hand, the part of the housing 1 below the electrolyte level forms a liquid retaining portion in which the electrolyte is retained. The liquid retaining portion is relatively less susceptible to destruction even when an explosion or the like occurs inside the gas-retaining portion.

The battery container 16 is rectangular and has an opening at the top. The interior of the battery container 16 is divided into a predetermined number (six in the illustrated example) of cell compartments 22 by at least one (five in the illustrated example) partition 20. Each of the cell compartments 22 houses the electrode assembly 24 and the electrolyte. Between the adjacent cell compartments 22, the respective electrode assemblies 24 are connected in series by a strap 26 and a connector 28. In the electrode assembly 24 housed in the cell compartment 22 at each end of the battery container 16, the positive electrode or negative electrode is connected to an electrode pole 30 or 32 of the positive electrode or negative electrode.

The cover 18 includes: a substantially rectangular top plate 18a; a belt-like leg portion 18b with a predetermined width, which bends perpendicularly from the outer edge of the top plate 18a; and ribs 18c provided at positions corresponding to the respective partitions 20 of the battery container 16 so as to cooperate with the partitions 20 to divide the interior of the battery container 16. The cover 18 seals the opening of the battery container 16, with the inner face of the leg portion 18b welded to the outer face of the opening of the battery container 16 and the lower ends of the ribs 18c welded to the upper ends of the partitions 20.

Also, the top plate 18a of the cover 18 is provided with a pair of electrode terminals 34 and 36 to be connected to the electrode poles 30 and 32, respectively. The electrode terminals 34 and 36 are positioned near both ends of the longitudinal direction X and on one side of the width direction Y Also, on the other side of the width direction Y of the top plate 18a are openings (electrolyte injection holes) 38 through which the electrolyte is injected into the respective cell compartments 22. The electrolyte injection holes 38 are aligned at equal intervals in parallel with the longitudinal direction X. The electrolyte injection holes 38 are sealed with stoppers 40.

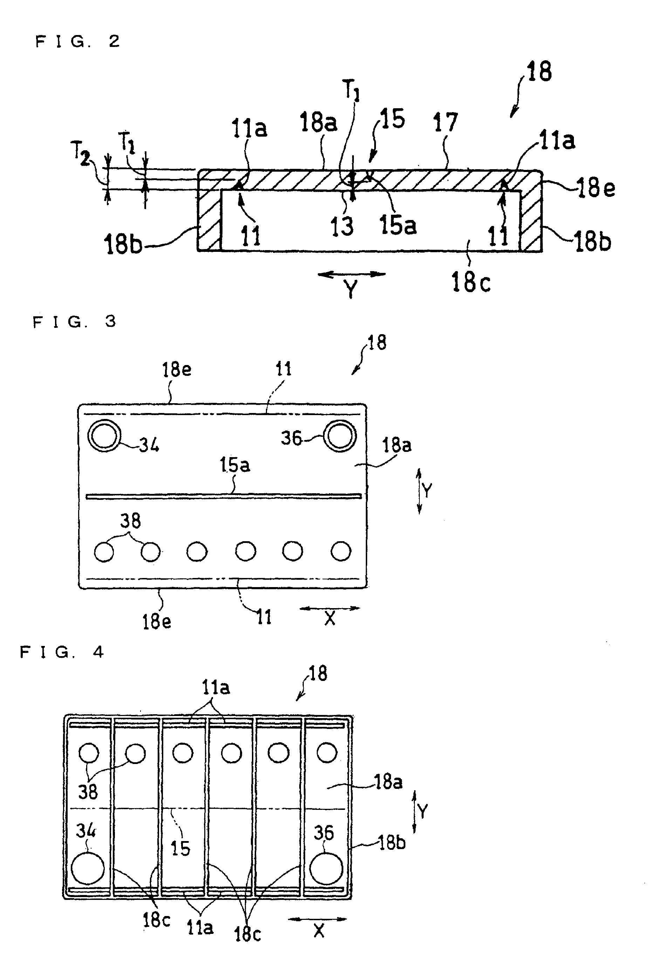

FIG. 2 is a sectional view taken along the line II-II in FIG. 1. FIG. 3 is a top view of the cover. FIG. 4 is a bottom view of the cover.
The cover 18 has two pairs of opposing ends (short-side ends 18d and long-side ends 18e). It has a peripheral thinned portion 11 near each of the long-side ends 18e. The peripheral thinned portion 11 is formed by cutting grooves 11a in an inner face 13 of the top plate 18a near each long-side end 18e in parallel with the long-side end 18e. The grooves 11a extend from the vicinity of one of the short-side ends 18d to the vicinity of the other short-side end 18d. However, since the ribs 18c are formed on the inner face 13 of the top plate 18a, the grooves 11a cannot be formed therein. Thus, the grooves 11a do not extend continuously in the longitudinal direction X (see FIG. 4).

The grooves 11a are preferably formed in the range within 30 mm from the long-side ends 18e. They are more preferably formed in the range within 20 mm. The position of the grooves 11a is set as appropriate within this range, according to the size of the battery 10, the material and thickness of the cover 18 and the housing 1, etc. Also, the lower limit of the above range is not particularly limited, but it is naturally the thickness of the leg portion 18b. If the grooves 11a are formed at positions doser to the center of the cover 18 than the above range, it may not be possible to facilitate rupture of the peripheral thinned portions 11. In terms of percentage, it is preferable to form the grooves 11a in the range within 20% of the width of the cover 18 from the long-side ends 18e. The more preferable range is within 10%.

Further, the cover 18 has a central thinned portion 15 at a position of the top plate 18a closer to the center than the peripheral thinned portions 11. The central thinned portion 15 is formed by cutting a groove 15a in an outer face 17 of the top plate 18a in parallel with the long-side ends 18e. The central thinned portion 15 extends from the vicinity of one of the short-side ends 18d to the vicinity of the other short-side end 18d.

The groove 15a of the central thinned portion 15 is preferably formed in the range of 30 to 70% of the width of the cover 18 from one of the long-side ends 18e (e.g., the long-side end 18e on the lower side in FIG. 3). The more preferable range is 40 to 60%.

In the battery 10 of the illustrated example, the central thinned portion 15 is formed at a position doser to the center than the electrode terminals 34 and 36 and the electrolyte injection holes 38, while the peripheral thinned portions 11 are formed at positions closer to the long-side ends 18e than the electrode terminals 34 and 36 and the electrolyte injection holes 38. Therefore, in the battery 10 of the illustrated example, the electrolyte injection holes 38 are positioned between the central thinned portion 15 5 and one of the peripheral thinned portions 11, while the electrode terminals 34 and 36 are positioned between the central thinned portion 15 and the other peripheral thinned portion 11.

The thickness of the top plate 18a at the peripheral thinned portions 11 and the central thinned portion 15 is set according to the material of the cover 18, the necessary mechanical strength, etc. Thus, the thickness (smallest thickness) T1 of the peripheral thinned portions 11 and the central thinned portion 15 is preferably, but not limited to, 20 to 80% of the thickness T2 of the other portions of the top plate 18a. The more preferable thickness range is 30 to 70%.

The peripheral thinned portions 11 and the central thinned portion 15 can be formed by, for example, after molding the cover 18, cutting the inner face 13 or outer face 17 of the molded cover 18. Alternatively, it is also possible to form protrusions on the molding surface of the mold for the cover, so that the peripheral thinned portions 11 and the central thinned portion 15 can be formed simultaneously with the molding of the cover 18.

Next, referring to FIG. 5, the functions of the peripheral thinned portions 11 and the central thinned portion 15 are described.
When the inner pressure of the battery increases, the cover 18 curves in such a manner that the top plate 18a protrudes upward. At this time, near the long-side ends 18e, the top plate 18a curves so as to protrude inward (so as to form a valley when viewed from above). At the central portion, the top plate 18a curves so as to protrude outwardly from the housing (so as to form a mountain when viewed from above). As such, both the peripheral thinned portions 11 and the central thinned portion 15 deform in such a manner that their cut areas are pressed open. As a result, the peripheral thinned portions 11 and the central thinned portion 15 rupture when subjected to a lower inner pressure. Therefore, when the energy to cause rupture of the housing is still small, it is possible to rupture the housing to release the inner pressure. It is thus possible to suppress scattering of pieces and electrolyte.

As described above, in the peripheral thinned portions 11 and the central thinned portion 15, in consideration of the deformation of the top plate 18a caused by rupture of the battery due to an increase of the inner pressure, the grooves 11a and 15a are formed on either one of the inner and outer faces of the top plate 18a so that the deformation facilitates the rupture of the peripheral thinned portions 11 and the central thinned portion 15.

On the other hand, as illustrated in FIG. 6, when the cover 18 is subjected to an external pressure, the top plate 18a curves so as to protrude inwardly into the housing. At this time, near the long-side ends 18e, the cover 18 curves so as to protrude outwardly from the housing, and at the central portion, the top plate 18a curves so as to protrude inwardly into the housing. Therefore, both the peripheral thinned portions 11 and the central thinned portion 15d deform in such a manner that their cut areas are narrowed. As such, when subjected to an external force, the cover 18 can exhibit the strength equivalent to that without the peripheral thinned portions 11 and the central thinned portion 15. Therefore, the rupture of the housing 1 is facilitated upon an increase of the inner pressure, while the strength of the housing 1 to withstand an external force is prevented from lowering.

Next, Embodiment 2 of the invention is described.

### (Embodiment 2)

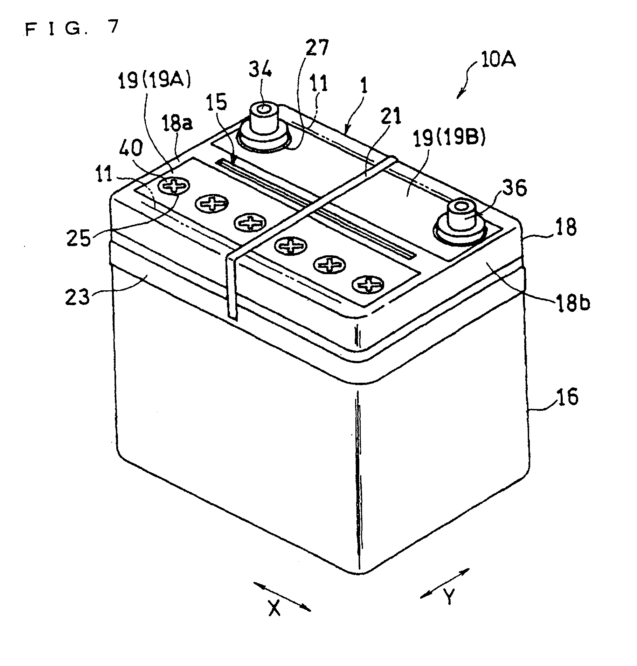

FIG. 7 is a perspective view of the appearance of a secondary battery according to Embodiment 2 of the invention.
A battery 10A illustrated therein comprises the battery 10 of FIG. 1 further including anti-scattering members 19, 21, and 23. Each of the anti-scattering members 19, 21, and 23 is preferably an adhesive material comprising a sheet-like substrate and an adhesive layer formed on one face of the substrate. The substrate is preferably an elastic material.

Examples of materials of the substrate include: rubber materials such as chloroprene rubber, ethylene-propylene rubber, natural rubber, synthetic isoprene rubber, styrene-isoprene-styrene elastomer, and polyisoprene rubber; resin materials such as polyethylene, polypropylene, nylon, Teflon (®), polyvinyl chloride, ABS resins, polyacrylic acid esters, and silicone resins; metal materials such as copper, iron, nickel, aluminum, and stainless steel; and composite materials such as a ceramic and a resin, and a metal and a resin.
Examples of adhesives include acrylic resins, synthetic rubber, rosin derivatives, polyterpene resin, terpene phenolic resin, and petroleum resins.

The anti-scattering members 19, 21, and 23 are not limited to adhesive materials, and can be, for example, simple beft-like materials made of the above-mentioned rubber materials, resin materials, metal materials, and composite materials.
The anti-scattering members 19, 21, and 23 whose substrates are elastic adhesive materials are mainly described below.

In the battery 10A of the illustrated example, anti-scattering members 19A and 19B, each of which is a rectangular adhesive material, are affixed to the regions of the outer face of the top plate 18a between the central thinned portion 15 and the two peripheral thinned portions 11 as the anti-scattering members 19.

More specifically, the anti-scattering member 19A is disposed on the region of the top plate 18a having the electrolyte injection holes 38. In order to expose stoppers 40 for dosing the electrolyte injection holes 38, the anti-scattering member 19A has through-holes 25 at positions corresponding to the respective stoppers 40.

The anti-scattering member 19B is disposed on the region of the top plate 18a having the electrode terminals 34 and 36. In order to expose the electrode terminals 34 and 36, the anti-scattering member 19B has through-holes 27 at positions corresponding to the electrode terminals 34 and 36.

The anti-scattering member 23 is a belt-like adhesive material, and is affixed to the side faces of the battery container 16 so as to go around the upper side faces of the battery container 16 in the horizontal direction along the lower edge of the leg portion 18b.

The anti-scattering member 21 is a beft-like adhesive material which is narrower than the anti-scattering member 23. It is affixed to the outer faces of the cover 18 over the anti-scattering members 19 (19A and 19B) across the peripheral thinned portions 11 and the central thinned portion 15 in the width direction Y Both ends of the anti-scattering member 21 extend beyond the leg portion 18b of the cover 18, reaching the upper side faces of the battery container 16 and resting on the anti-scattering member 23.

By using a narrow belt-like adhesive material (e.g., 5 to 20 mm in width) as the anti-scattering member 21, it is possible to prevent the ratio of the parts of the anti-scattering member 21 in contact with the peripheral thinned portions 11 and the central thinned portion 15 from becoming too large. It is thus possible to prevent the rupture strength of the peripheral thinned portions 11 I and the central thinned portion 15 from becoming too high.

In the battery 10A of the illustrated example, just like the battery 10 of FIG. 1, when the housing ruptures due to an increase of the inner pressure, it is possible to facilitate rupture of the peripheral thinned portions 11 and the central thinned portion 15 of the housing, thereby suppressing scattering of pieces and electrolyte. At the same time, the anfi-scattering members 19 and 23, which are affixed to the portions excluding the peripheral thinned portions 11 and the central thinned portion 15, can prevent those portions from being destroyed. This makes it possible to prevent the housing from being destroyed more severely than the extent necessary for releasing the internal gas to outside. As such, scattering of pieces, etc. can be suppressed in a synergistic manner.

In addition, the anti-scattering members 19, 21, and 23, comprising adhesive materials, can prevent scattering of pieces produced by rupture of the peripheral thinned portions 11 and the central thinned portion 15 and destruction of other portions.
Further, by bringing the anti-scattering member 21, comprising an adhesive material, into contact with a part of the peripheral thinned portions 11 and the central thinned portion 15, it is possible to prevent scattering of pieces produced by rupture of the peripheral thinned portions 11 and the central thinned portion 15. Also, since the anti-scattering member 21 is in contact with only a part of the peripheral thinned portions 11 and the central thinned portion 15, it is also possible to prevent the peripheral thinned portions 11 and the central thinned portion 15 from becoming so strong that their rupture is not facilitated.

The anti-scattering members 19, 21, and 23, which include an elastic material as the substrate, stretch together with the swelling of the housing due to an increase of the inner pressure. Thus, at least until the peripheral thinned portions 11 and the central thinned portion 15 rupture, rupture of the anti-scattering members 19, 21, and 23 themselves is suppressed. Hence, pieces produced can be effectively held.

Next, Embodiment 3 of the invention is described.

### (Embodiment 3)

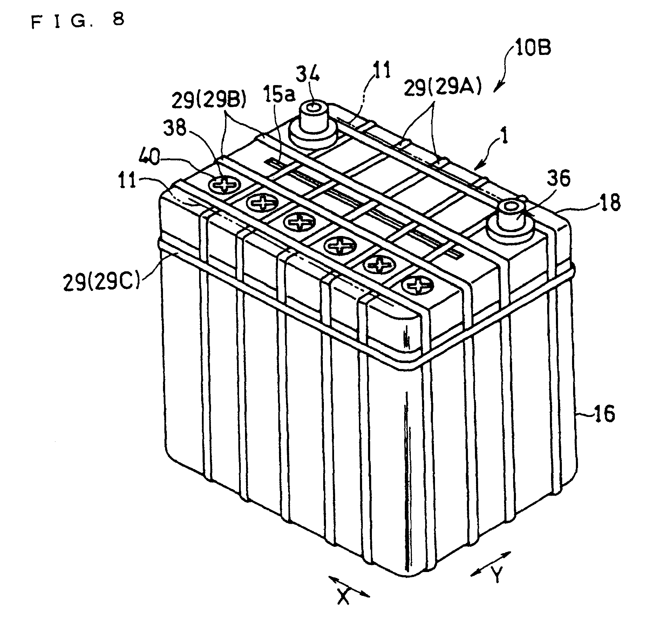

FIG. 8 is a perspective view of a secondary battery according to Embodiment 3 of the invention. A battery 10B illustrated therein comprises the battery 10 of FIG. 1 further including anti-scattering members 29 (29A, 29B, and 29C).

More specifically, in the battery 10B illustrated therein, a predetermined number (10 in the illustrated example) of anti-scattering members 29 are disposed on the outer faces of the housing so as to go around the housing in various directions. Each of the anti-scattering members 29 can be an elastic endless belt (e.g., rubber band). In this case, the anti-scattering members 29 are fitted onto the outer faces of the housing.

Each anti-scattering member 29 can be a simple belt-like member which is left unclosed. It can be, for example, a belt-like polyimide film. In this case, the anti-scattering members 29 are wrapped around the housing. In order to prevent each anti-scattering member 29 from becoming detached easily from the housing, it is preferable to join both ends of the anti-scattering member 29 together or fix both ends to the housing.

Further, each anti-scattering member 29 can be formed of a wire rod comprising a metal material such as copper, iron, nickel, aluminum, or stainless steel, specifically, a wire.
The anti-scattering members 29 which are elastic endless belts are mainly described below. When the anti-scattering members 29 are simple belt-like members or wires, the arrangement thereof can be the same as that of the endless belts.

In the battery 10B, five anti-scattering members 29 (29A) are fitted onto the outer faces of the housing 1 in such a manner that they are parallel to the width direction Y at the top and bottom faces of the housing and are parallel to the vertical direction at the side faces of the housing. The anti-scattering members 29A are arranged at predetermined intervals in the longitudinal direction X of the housing in such a manner that they do not overlap the electrolyte injection holes 38 and the electrode terminals 34 and 36. By arranging the anti-scattering members 29A as described above, the energy of scattering pieces of the cover 18 8 can be reduced.

Further, four anti-scattering members 29 (29B) are fitted onto the outer faces of the housing over the anti-scattering members 29A in such a manner that they are parallel to the longitudinal direction X at the top and bottom faces of the housing and are parallel to the vertical direction at the side faces of the housing. The anti-scattering member 29B are arranged at predetermined intervals in the width direction Y of the housing in such a manner that they do not overlap the electrolyte injection holes 38, the electrode terminals 34 and 36, the peripheral thinned portions 11, and the central thinned portion 15. This ensures that the five anti-scattering members 29A are pressed against the outer faces of the cover 18.

Further, one anti-scattering member 29 (29C) is fitted onto the upper outer faces of the battery container 16 over the anti-scattering members 29B in such a manner that it goes around the side faces of the housing in the horizontal direction.

As described above, by providing the anti-scattering members 29 comprising endless belts, simple bands, wires, etc., instead of the anti-scattering members 19, 21, and 23 comprising the adhesive materials of Embodiment 2, it is also possible to reduce the energy of scattering pieces due to rupture of the peripheral thinned portions 11 and the central thinned portion 15. As such, scattering of pieces can be suppressed.

Next, Embodiment 4 of the invention is described.

### (Embodiment 4)

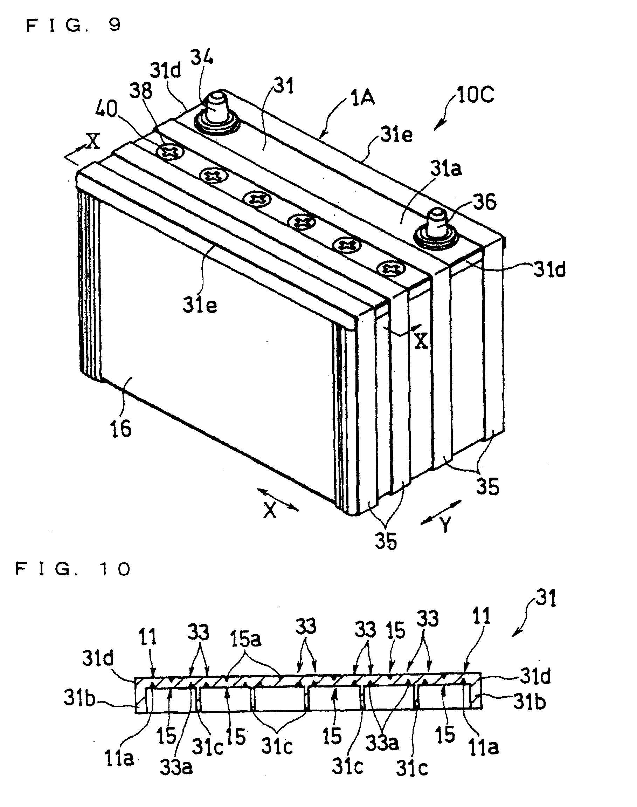

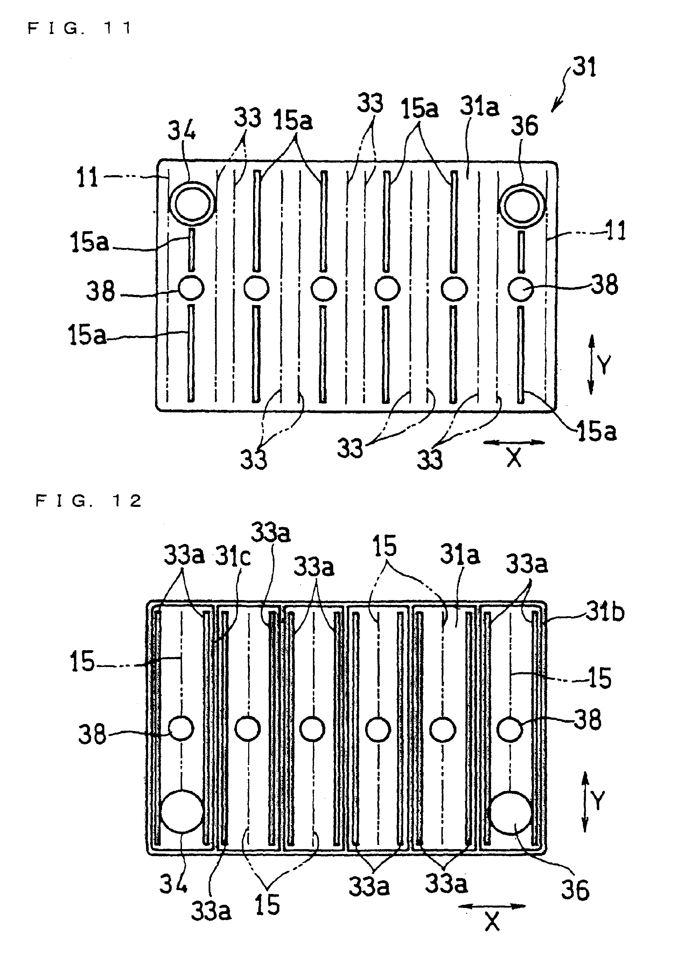

FIG. 9 is a perspective view of a secondary battery according to Embodiment 4 of the invention. FIG. 10 is a sectional view of the secondary battery of FIG. 9 taken along the line X-X. FIG. 11 is a top view of a cover. FIG. 12 is a bottom view of the cover.

In a battery 10C illustrated therein, a housing 1A comprises a battery container 16 and a cover 31. The outer shape of the housing 1 A is the same as that of the battery 10 of FIG. 1.

In the cover 31, peripheral thinned portions 11 are provided near short-side ends 31d, not long-side ends 31e, in parallel with the short-side ends 31d. The position of the peripheral thinned portions 11 in the battery 10C is in the range within 10 mm from the short-side ends 31d.

In the cover 31, a central thinned portion 15 is provided for each cell compartment 22. More specifically, the central thinned portion 15 is formed by cutting a groove 15a in the outer face of a top plate 18a at the center (the center in the longitudinal direction X) of each cell compartment 22 in parallel with the short-side ends 31d. These central thinned portions 15 are positioned closer to the center of the top plate 18a than the peripheral thinned portions 11 in the longitudinal direction X.

Further, the cover 31 has rib-side thinned portions 33 near both sides of ribs 31c in the longitudinal direction X. The rib-side thinned portions 33 are formed by cutting grooves 33a in the inner face of the cover 31 near both sides of each rib 31c (e.g., within 10 mm from the rib 31c) in parallel with the ribs 31c.

The thickness (smallest thickness) of the top plate 31a at the peripheral thinned portions 11, the central thinned portions 15, and the rib-side thinned portions 33 is set according to the material of the cover 31, the necessary mechanical strength, etc. Thus, the thickness of the peripheral thinned portions 11, the central thinned portions 15, and the rib-side thinned portions 33 is preferably, but is not limited to, 20 to 80% of the thickness of the other portions of the top plate 18a. It is more preferably 30 to 70%.

In the battery 10C of the illustrated example, the cover 31 has an electrolyte injection hole 38 for each of the cell compartments 22, and the electrolyte injection holes 38 are aligned in the longitudinal direction X at almost the center in the width direction Y
Since the grooves 33a cannot be formed at the electrolyte injection holes 38 and the electrode terminals 34 and 36, the central thinned portions 15 are discontinuous at these portions.

Further, in the battery 10C, a predetermined number (four in the illustrated example) of anti-scattering members 35 are disposed on the outer faces of the housing 1 A so as to go around the housing in the longitudinal direction X. The anti-scattering members 35 are preferably elastic endless belts (e.g., rubber band). In this case, the anti-scattering members 35 are fitted onto the outer faces of the housing. The anti-scattering members 35 are arranged at predetermined intervals in the width direction Y of the housing in such a manner that they do not overlap the electrolyte injection holes 38 and the electrode terminals 34 and 36. By arranging the anti-scattering members 35 as described above, the energy of scattering pieces of the cover 31 can be reduced in a reliable manner.

Each anti-scattering member 35 can be a simple beft-like member which is left undosed, instead of an endless beft. In this case, the anti-scattering members 35 are wrapped around the housing. In order to prevent each anti-scattering member 35 from becoming detached easily from the housing, it is preferable to join both ends of the anti-scattering member 35 together or fix both ends to the housing.

Further, each anti-scattering member 35 can be formed of a wire rod (e.g., wire) comprising a metal material such as copper, iron, nickel, aluminum, or stainless steel.
The anti-scattering members 35 which are elastic endless belts are mainly described below. When the anti-scattering members 35 are simple belt-like members or wire rods comprising metal materials, the arrangement of the anti-scattering members 35 can be the same as that of the anti-scattering members 35 comprising endless belts.

When the secondary battery is of a large size, the cover is reinforced with the ribs to a large extent. In such cases, by providing each part of the cover 31 corresponding to each cell compartment 22 with the central thinned portion 15 and the rib-side thinned portions 33, it is possible to facilitate rupture of the housing due to an increase of the inner pressure in a more reliable manner. Thus, scattering of pieces and the like can be suppressed in a more reliable manner.

Further, by providing the anti-scattering members 35, even when pieces are produced due to rupture of the central thinned portions 15 or the like, the scattering energy of the pieces can be reduced. It should be noted that the battery 10C illustrated in FIG. 9 has the anti-scattering members 35, but there is no limitation thereto, and the anti-scattering members 35 can be omitted. This is because merely providing the cover 31 with the peripheral thinned portions 11, the central thinned portions 15, and the rib-side thinned portions 33 can produce the effect of suppressing scattering of pieces and the like.

Next, Embodiment 5 of the invention is described.

### (Embodiment 5)

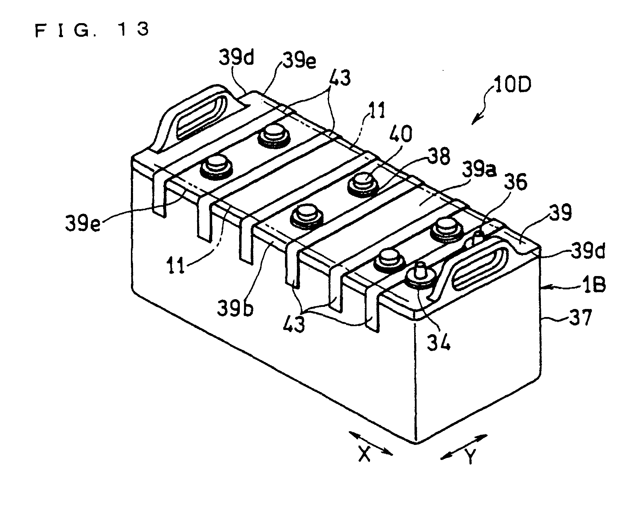

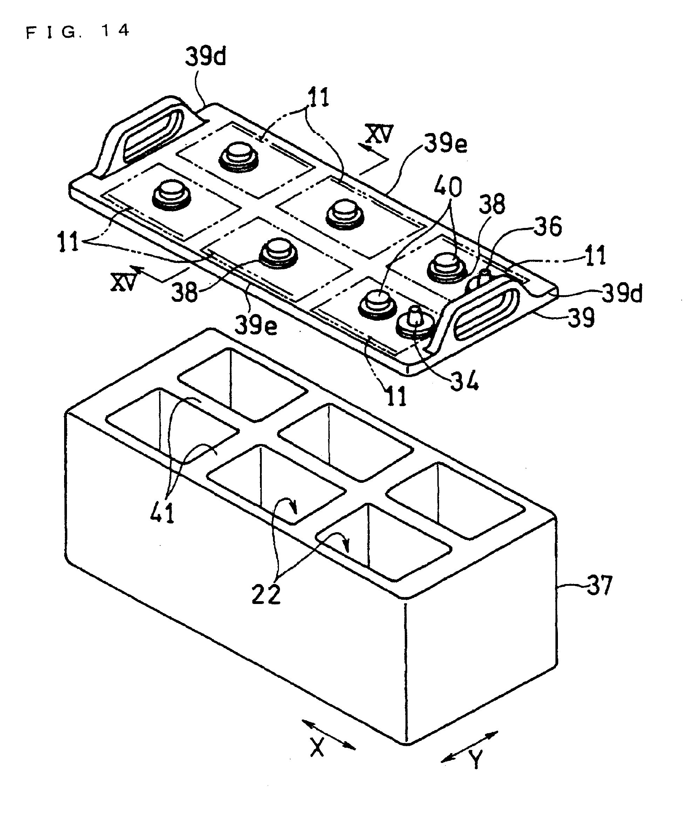

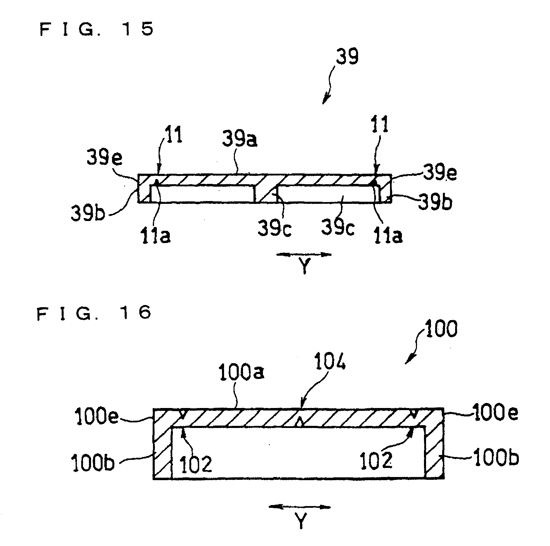

FIG. 13 illustrates a secondary battery according to Embodiment 5 of the invention. FIG. 14 is an exploded perspective view of the intemal structure of the secondary battery of FIG. 13. FIG. 15 is a transverse sectional view of the structure of a cover.

A battery 10D of FIG. 13 has a housing 1 B which includes a battery container 37 and a cover 39 for sealing the opening thereof. The housing 1 B is rectangular in the same manner as in the battery 10 of FIG. 1. However, in the battery 10D, the interior of the housing 1 B is divided by partitions 41 into a total of six cell compartments 22: three rows in the longitudinal direction X and two rows in the width direction. Each cell compartment 22 contains an electrode assembly and an electrolyte, which are not shown.

The cover 39 includes a top plate 39a, a leg portion 39b, ribs 39c corresponding to the partitions 41, a pair of short-side ends 39d, and a pair of long-side ends 39e. The top plate 39a of the cover 39 has electrolyte injection holes 38 and stoppers 40, each of which is provided for each cell compartment 22. Further, near one of the short-side ends 9d of the top plate 39a are electrode terminals 34 and 36.

Further, the cover 39 has peripheral thinned portions 11 near the pair of long-side ends 39e in parallel with the long-side ends 39e. However, it has no central thinned portion. The peripheral thinned portions 11 are divided by the ribs 39c.

Further, the battery 10D has a predetermined number (six in the illustrated example) of belt-like anti-scattering members 43. The an6-scattering members 43 are provided on the outer faces of the cover 39 and the battery container 37 across the peripheral thinned portions 11 in the width direction Y The anti-scattering members 43 can be formed of the same adhesive materials as those of Embodiment 2, or can be the same rubber bands or wires as those of Embodiments 3 and 4.

When the anti-scattering members 43 are formed of adhesive materials, it is preferable to provide the anti-scattering members 43 so that both ends thereof reach the upper parts of the side faces of the battery container 37. When the anti-scattering members 43 are formed of rubber bands or wires, it is preferable to provide the anti-scattering members 43 so that they go around the housing in the width direction Y

When the housing 1 B of the battery 10D ruptures due to an increase of the inner pressure, the above-described structure facilitates the rupture, thereby making it possible to reduce the energy of scattering pieces and the like. In addition, the anti-scattering members 43 can prevent the battery container 37 from being destroyed excessively. Thus, scattering of pieces and the like can be suppressed.

Next, Examples of the invention according to Embodiments 1 to 5 are described. However, the invention is not to be construed as being limited to these Examples.

### (Example 1)

A lead-acid battery of type 80D26 according to JIS D 5301:2006 (lead-acid starter battery) was produced as a secondary battery corresponding to the battery 10 of Embodiment 1 (see FIG. 1).
The housing of the battery 10 had a height of approximately 204 mm, a width of approximately 173 mm, and a length of approximately 260 mm. The thickness of the side faces of the battery container 16 and the thickness of the top plate 18a and the leg portion 18b of the cover 18 were approximately 2 mm. The material of the battery container and the cover was polypropylene.

Grooves 11a with a width of 0.5 mm and a greatest depth of 1 mm were formed in the cover at positions 10 mm inward from the long-side ends by cutting the inner face of the top plate in parallel with the long-side ends. In this manner, two peripheral thinned portions 11 were formed near the long-side ends. The smallest thickness of the top plate at the peripheral thinned portions was approximately 1 mm.

Further, a groove 15a with a width of 0.5 mm and a greatest depth of 1 mm was formed at a position 86.5 mm inward fi-om the long-side ends by cutting the outer face of the top plate in parallel with the long-side ends. In this manner, a central thinned portion 15 was formed at almost the center of the top plate 18a in the width direction Y The smallest thickness of the top plate at the central thinned portion was approximately 1 mm.

An electrode assembly 20 for a lead-acid battery and an electrolyte (dilute sulfuric acid) were placed in each cell compartment 22 of the housing, and electrode poles 30 and 32 were connected to electrode terminals 34 and 36, respectively. The cover was welded to the opening of the battery container to seal the opening of the battery container.
In this manner, the secondary battery of Example 1 was produced.

### (Example 2)

A secondary battery produced in the same manner as in Example 1 was further provided with anti-scattering members 19, 21, and 23 comprising adhesive materials, to produce a secondary battery corresponding to the battery 10A of FIG. 7.

The substrate for each anti-scattering member 19 was a rectangular polyvinyl chloride film of 250 × 75 mm. The substrate for the anti-scattering member 21 was a polyvinyl chloride film with a width of 10 mm. The substrate for the anti-scattering member 23 was a polyvinyl chloride film with a width of 15 mm.

The anti-scattering members 19 were provided at positions at which they did not overlap the peripheral thinned portions 11 and the central thinned portion 15. The anti-scattering members 19 were provided with through-holes at positions corresponding to the electrolyte injection holes 38 and the electrode terminals 34 and 36.

The anti-scattering member 23 was provided so as to go around the upper side faces of the battery container 16 in the horizontal direction along the lower edge of the leg portion 18b of the cover 18. The anti-scattering member 21 was provided over the anti-scattering members 19 in such a manner that they were in parallel with the width direction Y at the midpoint of the upper face of the top plate 18a in the longitudinal direction X. Both ends of the anti-scattering member 21 were laid on the anti-scattering member 23.

### (Example 3)

A secondary battery produced in the same manner as in Example 1 was further provided with anti-scattering members 29 (29A, 29B, and 29C) comprising rubber bands with a width of 8 mm and a thickness of 2 mm, to produce a secondary battery corresponding to the battery 10B of FIG. 8.

More specifically, first, the anti-scattering members 29A were fitted onto the outer faces of the housing across the peripheral thinned portions 11 and the central thinned portion 15 in the width direction Y A total of five anti-scattering members 29A were disposed between six stoppers 40 which were aligned on the upper face of the cover 18.

Subsequently, in order to further secure the anti-scattering members 29A from outside, the anti-scattering members 29B were fitted onto the outer faces of the housing in such a manner that they were parallel to the longitudinal direction X at the upper and bottom faces of the housing. A total of four anti-scattering members 29B were disposed so that they did not overlap the electrolyte injection holes 38, the electrode terminals 34 and 36, the peripheral thinned portions 11, and the central thinned portion 15.

Further, in order to secure the anti-scattering members 29B from outside, the anti-scattering member 29C was fitted onto the outer faces of the housing so as to go around the battery container 16 in the horizontal direction along the lower edge of the leg portion 18b of the cover 18 at the upper part of side faces of the battery container 16.

### (Example 4)

A secondary battery produced in the same manner as in Example 1 was further provided with anti-scattering members 29 (29A, 29B, and 29C) comprising beft-like polyimide films with a width of 8 mm and a thickness of 0.05 mm, to produce a secondary battery corresponding to the battery 10B of FIG. 8. The positions of the anfi-scattering members 29 were the same as those of Example 3. Both ends of each anti-scattering member 29 were bonded together, so that they were secured to the outer faces of the housing.

### (Example 5)

A secondary battery produced in the same manner as in Example 1 was further provided with anti-scattering members 29 (29A, 29B, and 29C) comprising adhesive materials including beft-like polyimide films with a width of 8 mm and a thickness of 0.05 mm as the substrates, to produce a secondary battery corresponding to the battery 10B of FIG. 8. The positions of the anti-scattering members 29 were the same as those of Example 3.

### (Example 6)

A secondary battery produced in the same manner as in Example 1 was further provided with anti-scattering members 29 (29A, 29B, and 29C) comprising iron wires with a diameter of 0.5 mm, to produce a secondary battery corresponding to the battery 10B of FIG. 8. The positions of the anfi-scattering members 29 were the same as those of Example 3.

### (Example 7)

A secondary battery produced in the same manner as in Example 1 was further provided with anti-scattering members 29 (29A, 29B, and 29C) comprising adhesive materials including belt-like aluminum films with a width of 8 mm and a thickness of 0.05 mm as the substrates, to produce a secondary battery corresponding to the battery 10B of FIG. 8. The positions of the anti-scattering members 29 were the same as those of Example 3.

### (Comparative Example 1)

As illustrated in FIG. 16, a secondary battery was produced in the same manner as in Example 1, except that a cover 100 of a housing was provided with thinned portions in the arrangement opposite to Example 1.
More specifically, grooves with a width of 0.5 mm and a greatest depth of 1 mm were formed at positions 10 mm from the respective long-side ends 100e of the cover 100 in the width direction Y by cutting the outer face of a top plate 100a in parallel with long-side ends 100e. In this manner, thinned portions 102 were formed near the respective long-side ends 100e. The smallest value of the thickness of the thinned portions 102 was approximately 1 mm. Both ends of the thinned portions 102 extended to the vicinity of the short-side ends of the cover 100.

Further, a groove with a width of 0.5 mm and a greatest depth of 1 mm was formed at the center of the cover 100 in the width direction Y by cutting the inner face of the top plate 100a in parallel with the respective long-side ends 100e. In this manner, a thinned portion 104 was formed at the center of the top plate 100a in the width direction Y The smallest value of the thickness of the thinned portion 104 was approximately 1 mm. Both ends of the thinned portion 104 extended to the vicinity of the short-side ends of the cover 100.

### (Comparative Example 2)

A secondary battery was produced in the same manner as in Example 1 without forming the peripheral thinned portions 11, the central thinned portion 15, and the anti-scattering members.

The secondary batteries of Examples 1 to 7 and Comparative Examples 1 to 2 were subjected to a rupture test and an impact test in the following manner. In the rupture test, the condition of pieces produced and how pieces scattered were observed. Also, in the impact test, whether or not the cover became cracked was observed. The rupture test was conducted on three secondary batteries produced in each of Examples 1 to 6 and Comparative Examples 1 to 2. The impact test was also conducted on three secondary batteries produced in each of Examples 1 to 6 and Comparative Examples 1 to 2.

### (Rupture test)

First, before each secondary battery was charged, the stopper near the center of the cover was detached, and two copper wires of 0.3 mm in diameter were inserted into the part of the housing above the electrolyte level. The two leads were connected by connecting their tips with a copper wire with a length of 5 mm and a diameter of 0.1 mm inside the secondary battery. Subsequently, the stopper was attached to the opening again to seal the secondary battery.

Thereafter, the secondary battery was charged with a power of 6 A × 1 hr or more. After being fully charged, it was continuously charged so that hydrogen gas and oxygen gas were continuously produced inside the secondary battery. As a result, the interior of the secondary battery was in a condition in which the hydrogen gas could catch fire and bum immediately if a spark was produced in an ignition operation described below.

In this condition, an ignition operation was performed by applying a voltage of 10 V to the two 0.3-mm diameter copper wires at a maximum current of 100 A to break the 0.1-mm diameter copper wire due to heat and produce a spark due to breakage of the wire, thereby causing the hydrogen gas to catch fire.

Due to rapid combustion of the hydrogen gas, the inner pressure of the secondary battery was rapidly increased, thereby rupturing the secondary battery.

### (Impad test)

A metal weight of 1040 g was dropped on each secondary battery from a height of 150 cm to observe the state of breakage of the cover (whether or not it cracked).
The test results are shown in Table 1.

**[Table 1]**

| | Thinned portion | Anti-scattering member | | | Rupture test | Impact |
|---|---|---|---|---|---|---|
| | | Position | Material | Form | Size of pieces / state of scattering | test Cracks |
| Example 1 | Peripheral thinned portions and central thinned portion | - | - | - | Medium pieces / scattering was suppressed | None |
| Example 2 | Peripheral thinned portions and central thinned portion | See FIG. 7 | Polyvinyl chloride | Elastic adhesive material | Small pieces / not scattered not scattered | None |
| Example 3 | Peripheral thinned portions and central thinned portion | See FIG. 8 | Rubber | Elastic endless belt | Medium pieces / not scattered | None |
| Example 4 | Peripheral thinned portions and central thinned portion | See FIG. 8 | Polyimide | Elastic belt-like member | Medium pieces / not scattered | None |
| Example 5 | Peripheral thinned portions and central thinned portion | See FIG. 8 | Polyimide | Elastic adhesive material | Small piecest/ not scattered not scattered | None |
| Example 6 | Peripheral thinned portions and central thinned portion | See FIG. 8 | Iron (wire) | Wire | Medium pieces / not scattered | None |
| Example 7 | Peripheral thinned portions and central thinned portion | See FIG. 8 | Aluminum | Non-elastic adhesive material | Medium pieces / not scattered | None |
| Comparative Example 1 | Thinned portions in opposite arrangement | - | - | - | Very large pieces were scattered | Cracks |
| Comparative Example 2 | None | - | - | - | Very large pieces were scattered | None |

In Example 1, the peripheral thinned portions 11 and the central thinned portion 15 ruptured. Also, it was confirmed that a part of the housing excluding the thinned portions was destroyed. However, since the rupture of the peripheral thinned portions 11 and the central thinned portion 15 was facilitated, the energy of rupture became small. Thus, only medium pieces (pieces with areas of 9 to 49 cm²) were produced, and the degree of scattering of the pieces (the largest distance for which the pieces scattered) was also small. In the impact test, no destruction of the cover was observed.

In Example 2, the peripheral thinned portions 11 and the central thinned portion 15 ruptured in the same manner. Also, it was confirmed that a part of the housing excluding the thinned portions was destroyed. However, since the anti-scattering members 19, 21, and 23 were provided, only small pieces (pieces with areas of 9 cm² or less) were produced, and the pieces did not scatter since they were held by the anti-scattering members. In the impact test, no destruction of the cover was observed.

In contrast, in Comparative Example 2, which had no thinned portions in the cover and no anti-scattering members, scattering of very large pieces with areas of 49 cm² or more was observed.

In Comparative Example 1, in which the thinned portions were formed in the arrangement opposite to those of Examples 1 to 7, the strength to withstand an external impact was low, and cracking of the cover was observed in the impact test. Also, the thinned portions in the arrangement opposite to those of Examples 1 to 7 were almost ineffective in facilitating rupture due to an increase of the inner pressure. Thus, in the same manner as in Comparative Example 2, scattering of very large pieces was observed, and the degree of scattering of the pieces (the largest distance for which the pieces scattered) was more than 1.5 times that of Example 1.

In Comparative Example 2, which has no thinned portions, the strength to withstand an external impact was sufficient, and no cracking of the cover was observed in the impact test.

In Examples 3, 4, and 6, adhesive materials were not used as the anti-scattering members 29. Thus, the effect of increasing the mechanical strength of the cover by the anti-scattering members 29 is smaller than in Example 2. Thus, production of medium pieces was confirmed, but scattering of the pieces was suppressed. The results of Example 6 confirmed that even when the anti-scattering members 29 were wire rods, they were effective in suppressing scattering.

Example 5, which used polyimide tape (adhesive material) as the anti-scattering members 29, produced similar results to those of Example 1 using polyvinyl chloride tape (adhesive material). In contrast, in the case of Example 7, which used aluminum tape (adhesive material), scattering of pieces was not observed, but production of medium pieces was confirmed. This is probably because aluminum tape has a low elongation rate compared with polyvinyl chloride tape and polyimide tape, and the aluminum tape itself ruptured before the thinned portions ruptured. That is, it was confirmed that the substrate of the anti-scattering member preferably has elasticity and a high elongation rate.

Next, Embodiment 6 of the invention is described.

### (Embodiment 6)

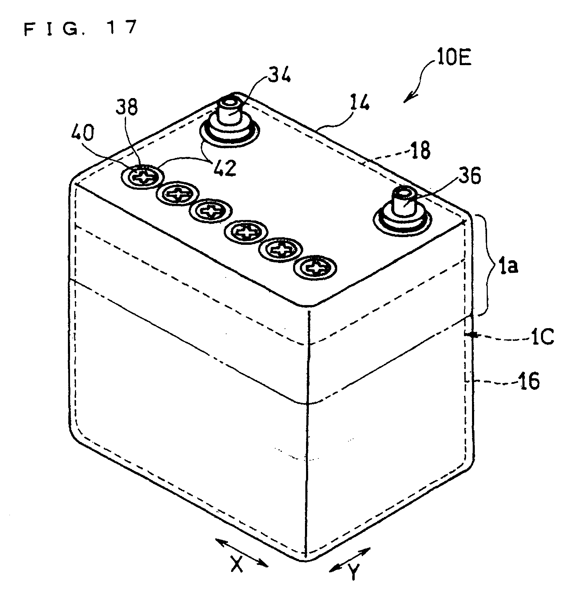

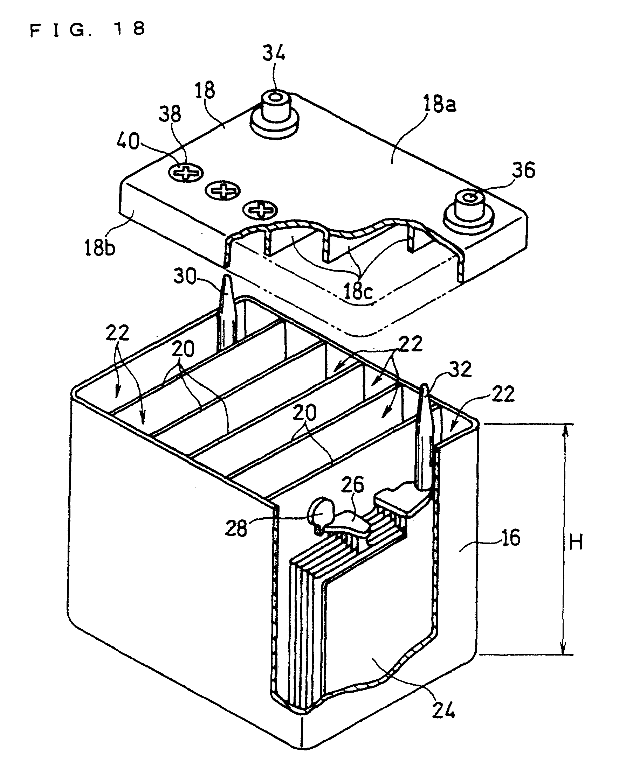

FIG. 17 is a perspective view of a secondary battery according to Embodiment 6 of the invention. FIG.18 illustrates a state in which the anti-scattering mechanism is removed from the secondary battery of FIG. 17.

In a battery 10E illustrated therein, the peripheral thinned portions 11 and the central thinned portion 15 are removed from the battery 10 of FIG. 1, and instead of them, an anti-scattering member 14 is provided for suppressing scattering of pieces and electrolyte.

The anti-scattering member 14 is a sheet-shaped member comprising a material having a gas permeable structure which prevents the electrolyte to pass therethrough while allowing the gas to pass therethrough. It is provided so as to cover at least the top and side faces of the housing. By covering the housing with the anti-scattering member 14 having such a gas permeable structure, it is possible to prevent the electrolyte from scattering when the housing ruptures due to a rapid increase of the inner pressure, while releasing the high pressure gas to prevent the rupture of the anti-scattering member 14 itself. As a result, the safety of the secondary battery is improved.

Examples of materials of the anti-scattering member 14 include non-woven fabric, woven fabric, net, porous material, and sponge.
Also, the raw materials which can be used therefor vary according to the properties of the electrolyte; however, for example, polypropylene, polyethylene, polyamide, polyurethane, natural rubber, glass fibers, nickel, copper, and iron can be used singly or in combination. When the electrolyte includes sulfuric acid, it is preferable to use non-woven fabric comprising a mixture of polypropylene and aramid fibers as the anti-scattering member 14.

It is preferable to form the material of the anti-scattering member 14 so that the amount of water it can absorb is 0.005 g/cm² or more. The more preferable amount of water absorbed is 0.01 to 0.5 g/cm². By setting the amount of water absorbed in this range, it is possible to provide sufficient gas permeability, while absorbing the electrolyte splashing onto the anti-scattering member 14 to prevent scattering of the electrolyte in a more reliable manner.

As used herein, the amount of water absorbed refers to a value obtained by immersing the anti-scattering member 14 of 1 cm² in water, pulling it up from the water after three minutes, hanging it in a constant temperature-humidity chamber which is maintained at a temperature of 25°C and a humidity of 55% for 3 minutes, and measuring its weight.

Also, in terms of preventing scattering of electrolyte completely, it is preferable to provide the anti-scattering member 14 so that it covers not less than 90% of the outer faces of the battery 10E, preferably the whole outer faces. However, since scattering of electrolyte from the bottom face of the battery container 16 is unlikely to occur when the battery 10E is mounted in an automobile or the like, the anti-scattering member 14 can also be provided so that it covers the upper face and four side faces of the housing 1C excluding the bottom face of the battery container 16.

Further, a gas-retaining portion 1 a of a housing 1C is highly more likely to be destroyed than a liquid retaining portion 1 c when the housing 1 ruptures due to an increase of the inner pressure. Therefore, the anti-scattering member 14 can also be provided so that it covers only the upper face of the housing 1C and the upper approximately 20 to 30% portions of the side faces of the housing 1C, which correspond to the gas-retaining portion 1 a of the housing 1C, (the lowest position of the anti-scattering member 14 in this case is shown by the dot-dot dashed line in FIG. 17). In this manner, by providing the anti-scattering member 14 only at the position corresponding to the gas-retaining portion 1 a of the housing 1C, the safety of the secondary battery can be effectively enhanced without unnecessarily increasing the total weight and volume.

Also, when a cover 18 is provided with electrode terminals 34 and 36 and electrolyte injection holes 38, it is possible, in consideration of workability, to provide the anti-scattering member 14 with at least one through-hole 42 at the corresponding position to facilitate the connection of a power cable and the injection of electrolyte. As used herein, "corresponding position" refers to the position of the anti-scattering member disposed in the vicinity of the housing of the secondary battery at which the access to the electrode terminal portions and the electrolyte injection holes from the through-hole becomes easy. It generally refers to the positions directly facing the electrode terminal portions and the electrolyte injection holes.

In FIG.17, the anti-scattering member 14 is provided with at least one (eight in the illustrated example) through-hole 42 at the positions facing the portions having the electrode terminals 34 and 36 and the electrolyte injection holes 38. By providing the through-hole(s) 42 of suitable dimensions at such positions, the safety of the secondary battery and its handleability can be improved in a good balance.

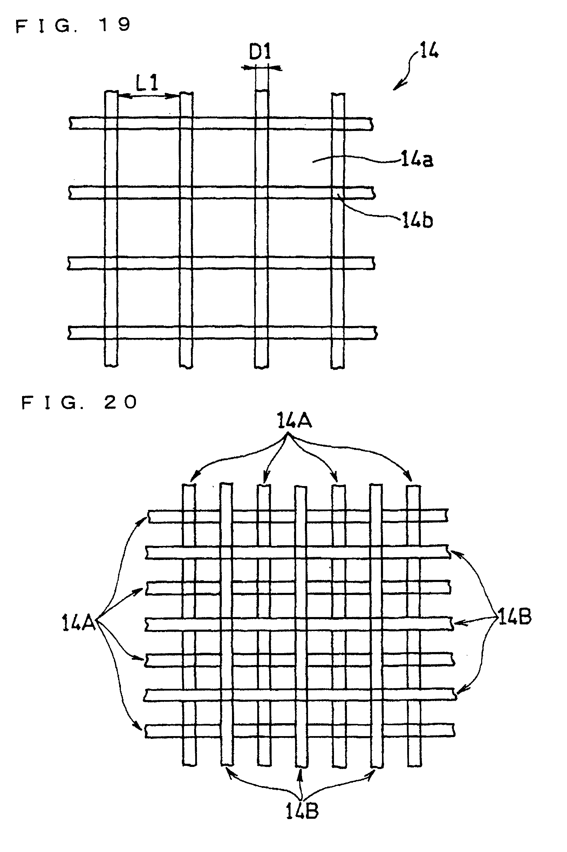

Also, the anti-scattering member 14 preferably has a multi-layer structure.
In the following description, the anti-scattering member 14 has a structure of net or woven fabric (they are hereinafter collectively referred to as net-like materials) illustrated in FIG. 19, and comprises a laminate of a plurality (two in the illustrated example) of net-like materials 14A and 14B illustrated in FIG. 20. In this case, it is desirable to laminate the net-like materials 14A and 14B so that openings 14a of the net-like material 14A overlap intersections 14b of the net-like material 14B. When the plurality of net-like materials 14A and 14B are laminated in this manner, not only the number of fibers in the plane direction of the net-like materials 14A and 14B increases, but also the number of fiber; in the thickness direction of the anti-scattering member 14 increases. Therefore, in particular, electrolyte traveling slantwise relative to the plane of the anti-scattering member 14 is more likely to splash onto the fibers, thereby making it possible to catch the scattering electrolyte with high probability. As such, scattering of electrolyte can be effectively prevented.

In connection with the above, when the anti-scattering member 14 is composed only of one net or woven fabric, the opening L1 thereof is preferably 0.01 to 3 mm. The fiber diameter D1 is preferably 0.001 to 10 mm.
Also, when the anti-scattering member 14 comprises a laminate of two or more nets or woven fabrics in the manner illustrated in FIG. 5, the opening L1 is preferably 0.01 to 5 mm. The fiber diameter D1 is preferably 0.001 to 10 mm. The fiber diameters D1 of the warp and the weft may be different.

Also, when the anti-scattering member 14 has a mulfi-layer structure, if the respective layers of the anti-scattering member 14 are composed of porous or sponge materials, the respective layers can be provided with different porosities. This makes it possible to control the effect of preventing scattering of electrolyte and gas permeability.
For example, if the porosity of the inner layer is heightened and the porosity of the outer layer is lowered, the inner layer has a high gas permeability due to the higher porosity, and is less affected by the gas pressure upon rupture. As a result, the shape of the anti-scattering member 14 can be maintained more easily. Also, the electrolyte having not been caught by the inner layer can be caught by the outer layer with the lower porosity. In this manner, the respective layers can be assigned to different functions.

Conversely, if the porosity of the outer layer is heightened and the porosity of the inner layer is lowered, the inner layer is more likely to be affected by the gas pressure upon rupture due to poor gas permeability. Therefore, it is difficult to maintain the shape of the anti-scattering member 14, but the effect of preventing liquid scattering is heightened due to the lower porosity

Also, by changing the pore sizes of the respective layers, it is possible to provide a structure which is permeable to gas but not electrolyte in a more reliable manner. For example, by disposing a thin layer with a small pore size outward and disposing a thick layer with a large pore size inward, it is possible to prevent all the layers of the anti-scattering member from rupturing due to an increase of the inner pressure, while preventing scattering of electrolyte effectively.

Examples according to Embodiment 6 are hereinafter described. The invention is not to be construed as being limited to the following Examples.

### (Example 8)

A commercially available secondary battery of type 80D26 (available from Panasonic Corporation) according to JIS D 5301 (lead-acid starter battery) was prepared. The secondary battery had dimensions of 260 × 173 × 202 mm and a total height (including electrode terminals and the like) of 225 mm.
A polypropylene non-woven fabric bag of 0.18 mm in thickness (outer dimensions: 400 × 350 mm, and water absorption: 0.015 g/cm²) was prepared as the anti-scattering member 14. The secondary battery was placed therein, and the cables connected to the electrode terminals were taken out from the opening of the bag (anti-scattering member). The opening and the cables were tied together with a polypropylene binding band.

### (Example 9)

A commercially available secondary battery, which was the same as that of Example 8, was prepared. Using a 0.18-mm-thick polypropylene non-woven fabric as in Example 8, a rectangular box (outer dimensions: 270 × 183 × 235 mm) was prepared as the anti-scattering member 14. The secondary battery was placed therein to cover the whole outer faces of the secondary battery.

### (Example 10)

A commercially available secondary battery, which was the same as that of Example 8, was prepared. A box (anti-scattering member) was prepared in the same manner as in Example 9, except that round holes, large enough for access to the electrode terminal portions and openings (electrolyte injection holes) of the top plate of cover of the secondary battery, were formed at positions corresponding thereto. The secondary battery was placed therein to cover the whole outer faces of the secondary battery excluding the electrode terminal portions and the electrolyte injection holes.

### (Example 11)

A commercial available secondary battery, which was the same as that of Example 8, was prepared. Using 0.7-mm diameter polyurethane fibers, a net with an opening of 5 mm square (water absorption: 0.003 g/cm²) was prepared as the anti-scattering member 14. The whole outer faces of the secondary battery were covered with the net (anti-scattering member). Then, the outer faces were further covered with the same net. At this time, the central portions of openings of the inner net and the intersections of the outer net overlapped.

### (Comparative Example 3)

A commercially available secondary battery, which was the same as that of Example 1, was prepared. No anti-scattering member was used.

### (Comparative Example 4)

A commercially available secondary battery, which was the same as that of Example 1, was prepared. Using a 0.18-mm-thick polypropylene film (water absorption: 0.001 g/cm², no gas permeability), a rectangular box (outer dimensions: 270 × 183 × 235 mm) was prepared. The secondary battery was placed therein to cover the whole outer faces of the secondary battery.

Three secondary batteries produced in each of Examples 8 to 11 and Comparative Examples 3 and 4 were subjected to the same rupture test as that of Example 1, to observe the state of scattering of electrolyte. Also, in order to quantify the state of scattering of electrolyte, the amounts of electrolyte having scattered in respective directions were measured to calculate the average value.

The amounts of scattered electrolyte were measured by disposing five qualitative filter papers No. 2 (filter papers according to JIS P 3801, No. 2) with a diameter of 125 mm so that they directly faced the upper face and the four side faces of the secondary battery (a total of five faces), and measuring the change in the weight of the five filter papers before and after scattering of electrolyte. The distance between each face of the secondary battery and each filter paper was set to 300 mm.
The above results are shown in Table 2.

**[Table 2]**

| | Anti-scattering member | Position | Total amount of change in filter paper weight (g) |
|---|---|---|---|
| Example 8 | Polypropylene non-woven fabric bag | Whole outer faces | 0.07 |
| Example 9 | Polypropylene non-woven fabric box | Whole outer faces | 0.10 |
| Example 10 | Polypropylene non-woven fabric box | Whole outer faces excluding terminals and the like | 2.81 |
| Example 11 | Polyurethane fiber nets (2 layers) | Whole outer faces | 6.94 |
| Comparative Example 3 | None | - | 21.74 |
| Comparative Example 4 | Polypropylene film | Whole outer faces | 15.89 |

As is dear from Table 2, in Example 8, in which the whole secondary battery was placed inside the polypropylene non-woven fabric bag, almost no scattering of electrolyte was observed, and there was almost no weight change of the filter papers. Contrary to this, in Comparative Example 3, in which the secondary battery was not provided with any anti-scattering means, the amount of scattered electrolyte was so large that the filter papers could not absorb all of it, and the amount of weight change that could be measured was as large as 21.74 g. Also, in each of Examples 9 to 11, the amount of weight change was significantly smaller than that of Comparative Example 3, which confirmed that the effect of suppressing scattering was sufficient.

Also, in Comparative Example 4, in which the secondary battery was placed in the polypropylene film box, since the box did not have a gas permeable structure, there were no paths for releasing the gas issuing from the secondary battery. As a result, the box itself ruptured and the electrolyte scattered in a large amount. From this result, it can be understood that it is important to form the anti-scattering member by using a material with a gas permeable structure which prevents the electrolyte from passing therethrough while allowing the gas to pass therethrough.

Examples 9 to 11 are analyzed in more details. In Example 9, having a similar configuration to that of Example 8, produced a very good effect in suppressing scattering, as in Example 8.

Also, Example 10, in which the whole outer surfaces of the secondary battery were provided with the anti-scattering member except for the portions corresponding to the electrode terminal portions and the electrolyte injection holes, also produced a large effect in suppressing scattering. This is probably because an explosion occurred in the portion above the liquid level inside the battery, thereby destroying only the portion above the liquid level and leaving the other portion undestroyed. This result indicates that if only the portion of the case which is highly likely to be destroyed upon rupture is covered, a sufficient effect can be obtained in suppressing scattering.

Also, in Example 11, in which the anti-scattering member 14 was composed of two net layers, the amount of scattered electrolyte was reduced to not more than 1/2 of Comparative Example 4, in which the polypropylene film box was used. This is probably because the droplets of the electrolyte having passed through the first layer could be effectively caught by the second layer. This result suggests that increasing the number of net layers will further enhance the effect of preventing liquid scattering. In this way, it was confirmed that providing the anti-scattering member 14 with a mulfi-layer structure is more effective in suppressing scattering due to an increase in the number of fibers in the thickness direction. Also, non-woven fabric using resin fibers or the like can also produce a similar effect since it locally has a structure similar to net (or woven fabric).

In the above-described Embodiment 6 of the invention and related Examples, it is also possible to provide the anti-scattering member 14 of Embodiment 6 for the battery 10 of FIG. 1. This produces a synergistic effect in suppressing scattering, thereby allowing almost complete prevention of scattering of pieces and electrolyte.

Next, Embodiment 7 of the invention is described.

### (Embodiment 7)

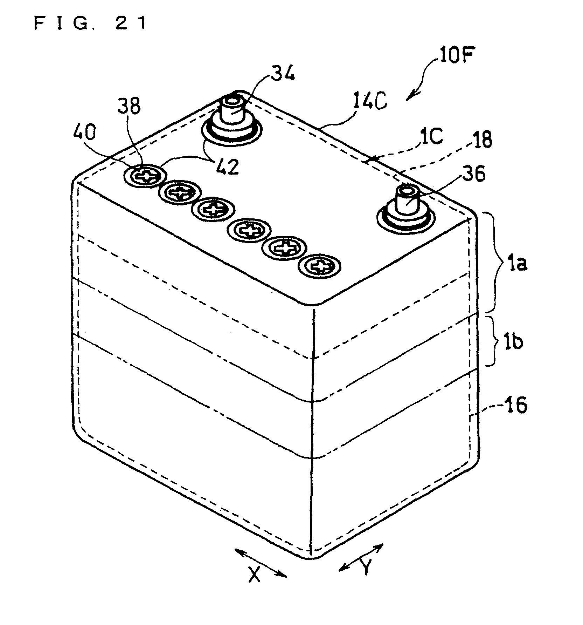

FIG. 21 is a perspective view of a secondary battery according to Embodiment 7 of the invention. It should be noted that the state of the secondary battery of FIG. 21 from which the anti-scattering mechanism is removed is the same as that illustrated in FIG. 18.

In a battery 10F illustrated therein, the peripheral thinned portions 11 and the central thinned portion 15 are removed from the battery 10 of FIG. 1, and instead, an anti-scattering member 14C is provided for suppressing scattering of pieces and electrolyte.

The anti-scattering member 14C has the same shape as that of the anti-scattering member 14 of the battery 10E of FIG. 17, and is formed of the same material.
The battery 10F is different from the battery 10E of FIG. 17 in that the anti-scattering member 14C is bonded to the housing 1 with an adhesive (not shown). Except for this, the configuration of the battery 10F is the same as that of the battery 10E of FIG. 17.

By bonding the anti-scattering member 14C to the housing 1, even when pieces are produced due to rupture of the housing 1, scattering of the pieces can be prevented due to the bonding of the anti-scattering member 14C. Further, where the anti-scattering member 14C is bonded to the housing 1, the anti-scattering member 14C and the housing 1C reinforce each other. It is thus possible to prevent the housing 1C from being destroyed more severely than necessary for releasing the inner gas. As such, the safety of the secondary battery is improved.

Also, when the anti-scattering member 14C is affixed to the housing 1C with an adhesive, the anti-scattering member 14C can be disposed at a desired position. Therefore, design flexibility increases.

The adhesive is an adhesive including, for example, a rosin derivative, polyterpene, or a petroleum resin such as a terpene phenolic resin.

As described above, it is highly necessary to provide the gas-retaining portion 1 a of the housing 1C with the anti-scattering member 14C. In this case, it is also possible to dispose the anti-scattering member 14C so as to cover the gas-retaining portion 1a of the housing 1C without bonding it, and bond only an area (a bonding area 1 b) of the anti-scattering member 14C of a predetermined width below the gas-retaining portion 1 a with an adhesive (the bonding area 1 b is shown by the dot-dot dashed lines of FIG. 1). In this case, the portion of the anti-scattering member 14C below the bonding area 1b may be cut off. This can dramatically improve the safety of the secondary battery without unnecessarily increasing the total weight and volume.

The anti-scattering member 14C can be disposed inside the housing 1C. If the anti-scattering member 14C is bonded to the inner faces of the housing 1C, the anti-scattering member 14C can be disposed so as to enclose almost all the electrolyte, thereby making it possible to prevent scattering of pieces and electrolyte.

However, when the anti-scattering member 14C is disposed inside the housing 1C, it is necessary to secure an additional space therefor. Also, due to capillarity or the like, the anti-scattering member 14C is constantly moistened with some electrolyte. Therefore, the ability to absorb and hold scattering electrolyte decreases. Also, due to the moisturization of the anti-scattering member 14C with electrolyte, the possibility that the gas permeable structure for releasing the gas may be dogged with the electrolyte increases.

On the other hand, it is possible to avoid an increase in the outer dimensions of the secondary battery and expose the electrode terminals 34 and 36 and the electrolyte injection holes 38 constantly, thereby not impairing the handleability of the secondary battery. Also, the anti-scattering member 14C does not break during transportation or the like, and can perform its function in a reliable manner.

Examples according to Embodiment 7 are hereinafter described. The invention is not to be construed as being limited to the following Examples.

### (Example 12)

A commercially available secondary battery of type 80D26 (available from Panasonic Corporation) according to JIS D 5301 (starter battery) was prepared. The secondary battery had dimensions of 260 × 173 × 202 mm and a total height (including electrode terminals and the like) of 225 mm.
A 2.8-mm-thick polypropylene non-woven fabric (water absorption: 0.015 g/cm²) was prepared as the material of the anti-scattering member 14C. An acrylic resin adhesive was prepared as the adhesive.

The polypropylene non-woven fabric was cut to shapes and dimensions which were substantially equal to the respective outer faces of the housing. The adhesive was applied to one face of the cut polypropylene non-woven fabric, which was then bonded to each face excluding the bottom face of the battery container, to produce the anti-scattering member 14C. The anti-scattering member for the top face of the housing was provided with holes large enough for the access to the electrode terminal portions and the electrolyte injection holes at positions corresponding to the electrode terminal portions and the electrolyte injection holes of the cover.

### (Example 13)

A commercially available secondary battery, which was the same as that of Example 12, was prepared. As the material of the anti-scattering member and the adhesive, the same ones as those of Example 1 were prepared.

The polypropylene non-woven fabric was cut to shapes and dimensions which were substantially equal to the respective inner faces of the housing. The adhesive was applied to one face of the cut polypropylene non-woven fabric, which was then bonded to each inner face excluding the bottom face of the battery container, to produce the anti-scattering member 14C. The anti-scattering member for the top face of the secondary battery was provided with holes having a suitable size at positions corresponding to the electrode terminal portions and the electrolyte injection holes.

### (Example 14)

A commercially available secondary battery, which was the same as that of Example 12, was prepared. As the material of the anti-scattering member 14C and the adhesive the same ones as those of Example 12 were prepared.
The anti-scattering member 14C was prepared in the same manner as in Example 12, except that the polypropylene non-woven fabric was also disposed on the bottom face of the battery container.

### (Example 15)

A commercially available secondary battery, which was the same as that of Example 12, was prepared. As the material of the anti-scattering member 14C and the adhesive, the same ones as those of Example 12 were prepared. Using the above-mentioned material, a bag capable of covering the gas-retaining portion of housing of the secondary battery and having the bonding area 1 b at the opening was prepared.
The bonding area 1 b was bonded to the portion below the gas-retaining portion so as to cover the gas-retaining portion of housing of the secondary battery, to produce the anti-scattering member.

### (Example 16)

A commercially available secondary battery, which was the same as that of Example 12, was prepared. A 2.2-mm-thick sponge-like nickel porous material (water absorption: 0.015 g/cm²) and the same polypropylene non-woven fabric as that of Example 12 were prepared as the materials of the anti-scattering member 14C. A cyanoacrylate adhesive was prepared as the adhesive.

The sponge-like nickel porous material was cut to shapes and dimensions which were substantially equal to the respective outer faces of the housing. The adhesive was applied to one face of the cut nickel porous material, which was then bonded to each face excluding the bottom face of the battery container, the electrode terminal portions, and the electrolyte injection holes. Further, the polypropylene non-woven fabric was bonded onto the nickel porous material, to produce the anti-scattering member 14 (water absorption: 0.015 g/cm²) with a multi-layer structure.

### (Example 17)

A secondary battery, which was the same as that of Example 12, was prepared. A 10-mm-thick polyurethane foam (water absorption: 0.012 g/cm²) was prepared as the material of the anti-scattering member 14C. As the adhesive, the same one as that of Example 12 was prepared.
The polyurethane foam was cut to shapes and dimensions which were substantially equal to the respective outer faces of the secondary battery. The adhesive was applied in the form of net to one face of the polyurethane foam, which was bonded to the whole outer faces of the secondary battery excluding the bottom face, the electrode terminal portions, and the electrolyte injection holes, to produce the anti-scattering member 14C.

### (Example 18)

A commercially available secondary battery, which was the same as that of Example 12, was prepared. A 2.8-mm-thick polyethylene porous material (water absorption: 0.010 g/cm²) was prepared as the anti-scattering member 14C. As the adhesive, the same acrylic resin adhesive as that of Example 12 was prepared.
The polyethylene porous material was cut to shapes and dimensions which were substantially equal to the respective outer faces of the secondary battery. The adhesive was applied onto one face of the polyethylene porous material, which was then bonded to the whole outer faces of the secondary battery excluding the bottom face, the electrode terminal portions, and the electrolyte injection holes, to produce the anti-scattering member 14C.

### (Example 19)

A commercially available secondary battery, which was the same as that of Example 12, was prepared. Using 2.8-mm diameter polypropylene fibers, a net with an opening of 5 mm square (water absorption: 0.015 g/cm²) was prepared as the anti-scattering member 14C. As the adhesive, the same one as that of Example 1 was prepared.
The net was bonded to the whole outer faces of the secondary battery with the adhesive.

### (Example 20)

A commercially available secondary battery, which was the same as that of Example 12, was prepared. As the anti-scattering member 14C, two nets, which were the same as that used in Example 19, were prepared. As the adhesive, the same one as that of Example 12 was prepared.
The first net was bonded to the whole outer faces of the secondary battery with the adhesive. The second net was bonded onto the first net so that the openings of the first net overlapped the intersections of the second net, to produce the anti-scattering member 14C (water absorption: 0.005 g/cm²).

### (Comparative Example 5)

A commercially available secondary battery, which was the same as that of Example 12, was prepared. No anti-scattering member was used.

### (Comparative Example 6)

A commercially available secondary battery, which was the same as that of Example 12, was prepared. A 0.02-mm-thick polypropylene film (water absorption: 0.001 g/cm², no gas permeability) was prepared as the material of the anti-scattering member 14C. As the adhesive, the same acrylic resin adhesive as that of Example 12 was prepared. Using the adhesive, the film was bonded to the whole outer faces of the secondary battery excluding the bottom face, the electrode terminal portions, and the electrolyte injection holes, to produce the anti-scattering member 14C.

Three secondary batteries produced in each of Examples 12 to 20 and Comparative Examples 5 and 6 were subjected to the same rupture test as that of Example 1, to observe the state of scattering of pieces and electrolyte. Also, in order to quantify the state of scattering of electrolyte, the amounts of electrolyte having scattered in respective directions were measured to calculate the average value. The amount of scattered electrolyte was determined by the above-described method (see Examples 8 to 11). The above results are shown in Table 3.

**[Table 3]**

| | Anti-scattering member | Position | Adhesive material | Total amount of change in filter paper weight (g) |
|---|---|---|---|---|
| Example 12 | Polypropylene non-ploypropylene non-woven fabric | Whole outer faces excluding bottom face, terminals, and injection holes | Acrylic resin adhesive | 0.15 |
| Example 13 | Polypropylene non-proypropylnene non-woven fabric | Whole inner faces excluding bottom face, terminals, and injection holes | Acrylic resin adhesive | 0.24 |
| Example 14 | Polypropylene non-woven fabric | Whole outer faces excluding terminals and injection holes | Acrylic resin adhesive | 0.13 |
| Example 15 | Polypropylene non-woven fabric bag | Whole outer faces of gas-retaining portion of housing | Acrylic resin adhesive (Only opening of bag was bonded) | 0.41 |
| Example 16 | Sponge-like nickel porous material and polypropylene non-woven fabric | Whole outer faces excluding bottom face, terminals, and infection holes | Cyanoacrylate adhesive | 0.07 |
| Example 17 | Polyurethane foam | Whole outer faces excluding bottom face, terminals, and injection holes | Acrylic resin adhesive | 0.17 |
| Example 18 | Polyethylene porous material porous material | Whole outer faces excluding bottom face, terminals, and injection holes | Acrylic resin adhesive | 0.18 |
| Example 19 | Polypropylene net | Whole outer faces | Acrylic resin adhesive | 2.76 |
| Example 20 | (one net) Polypropylene net (two nets) | Whole outer faces | Acrylic resin adhesive | 0.86 |
| Comparative Example 5 | None | - | - | 21.67 |
| Comparative Example 6 | Polypropylene film | Whole outer faces | Acrylic resin adhesive | 16.74 |

In Example 12, in which the polypropylene non-woven fabric was bonded to the whole outer faces of the secondary battery excluding the bottom face and the like, almost no scattering of electrolyte was observed, and there was almost no weight change of the filter papers. Also, no scattering of pieces was observed.
Contrary to this, in Comparative Example 5, in which the secondary battery was not provided with any anti-scattering means, the amount of scattered electrolyte was so large that the filter papers could not absorb all of it, and the amount of weight change that could be measured was as large as 21.67 g. Also, in each of Examples 13 to 20, the amount of weight change was significantly smaller than that of Comparative Example 5, which confirmed that the effect of suppressing scattering was sufficient.

Also, in Comparative Example 6, in which the polypropylene film was bonded to the housing, since the polypropylene film did not have a gas permeable structure, there were no paths for releasing the gas issuing from the secondary battery. As a result, the polypropylene film itself ruptured and the electrolyte scattered in a large amount. From this result, it can be understood that it is important that the anti-scattering member 14C has a gas permeable structure which prevents the electrolyte from passing therethrough while allowing the gas to pass therethrough.

Examples 13 to 20 are analyzed in more details. In Example 13, in which the anti-scattering member was disposed inside the housing, more electrolyte scattered than in Example 12. This is probably because the anti-scattering member was constantly in contact with the electrolyte and partially moistened with the electrolyte due to capillarity, and thus the amount of electrolyte it could absorb was decreased. However, the amount of scattered electrolyte was significantly smaller than that of Comparative Example 5, which showed a sufficient effect in suppressing scattering.

Example 14, having a similar configuration as that of Example 12 except that the bottom face was provided with the anti-scattering member, also produced a very good effect in suppressing scattering in the same manner as Example 12. This result indicates that the need to provide the bottom face of the housing with the anti-scattering member is low.

Example 15, in which only the gas-retaining portion of housing of the secondary battery was covered with the anti-scattering member, also produced a good effect in suppressing scattering. This indicates that it is important to provide the anti-scattering member for the portion which is susceptible to destruction when the secondary battery ruptures.

Example 16, in which the anti-scattering member was composed of the nickel porous material and the polypropylene non-woven fabric, was more effective in suppressing scattering than Example 12. This is probably because the anti-scattering member was provided with a mulfi-layer structure. This indicates that providing the anti-scattering member with a multi-layer structure can improve the effect of suppressing scattering.

Also, Examples 17 and 18, in which the anti-scattering member was composed of the polyurethane foam or polyethylene porous material, also produced a similar effect to Example 12 in suppressing scattering.

Further, Examples 19 and 20, in which the polypropylene net was used as the anti-scattering member, also produced a good effect in suppressing scattering. In particular, in Example 20, in which the two nets were used as the anti-scattering member, the amount of scattered electrolyte was smaller than 1/2 of Example 19. This is probably because the number of fibers of the nets increased not only in the plane direction but also in the thickness direction, thereby producing a larger effect in catching the electrolyte. This suggests that non-woven fabric or the like is suitable as the anti-scattering member of the invention.

In the above-described Embodiment 7 of the invention and related Examples, it is also possible to provide the anti-scattering member 14C of Embodiment 7 for the battery 10 of FIG. 1. This produces a synergistic effect in suppressing scattering, thereby allowing almost complete prevention of scattering of pieces and electrolyte.

Next, Embodiment 8 of the invention is described.

### (Embodiment 8)

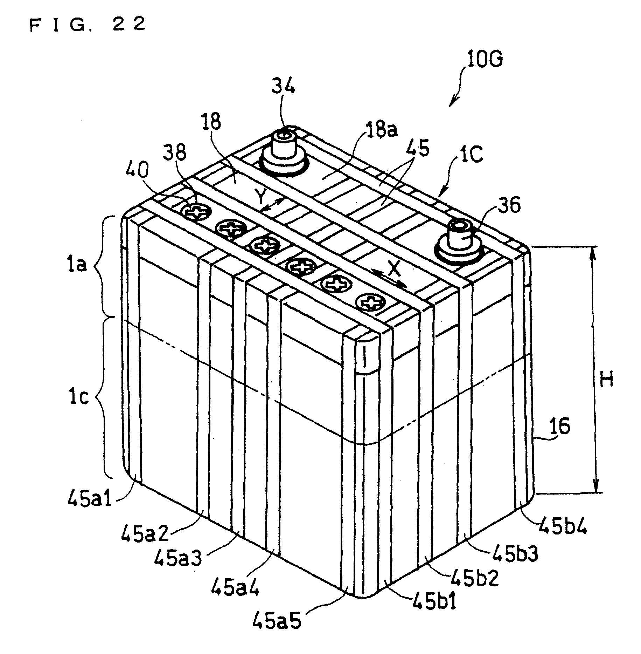

FIG. 22 is a perspective view schematically showing the structure of a secondary battery according to Embodiment 8 of the invention. It should be noted that the state of the secondary battery of FIG. 22 from which the anti-scattering mechanism is removed is the same as that illustrated in FIG. 18.

In a battery 10G of FIG. 22, the peripheral thinned portions 11 and the central thinned portion 15 are removed from the battery 10 of FIG. 10, and instead, anti-scattering members 45 are provided.
The anti-scattering members 45 are composed of a plurality of members (45a1 to 45a5 and 45b1 to 45b4) of predetermined shape (belt or tape shape in the illustrated example). The plurality of members are affixed to the battery container 16 and the cover 18, i.e., the outer faces of the housing 1C, at predetermined intervals, with an adhesive (not shown), so as to extend over the battery container 16 and the cover 18 and release the gas issuing from the housing 1 when the housing 1 ruptures.

By providing the anti-scattering members 45 composed of the plurality of such members, when the battery 10G ruptures due to an increase of the inner pressure, it is possible to release the high pressure gas issuing therefrom. At the same time, it is possible to prevent destruction of the anti-scattering members 45 themselves and suppress scattering of pieces.

Also, when the housing 1 is severely destroyed into pieces, the pieces can be held by the anti-scattering members 45. Thus, scattering of the pieces can be suppressed. Further, where the anti-scattering members 45 are affixed to the housing 1, the anti-scattering members 45 and the housing 1C reinforce each other. It is thus possible to prevent the housing 1 from being destroyed more severely than necessary. As such, the safety of the secondary battery is improved.

To achieve the above-described effects, the plurality of members constituting the anti-scattering members 45 preferably have a rupture strength of 37.5 to 150 N/25 mm. This rupture strength refers to a value measured by stretching a test specimen of a shape specified in Japan Industrial Standard (standard number JIS K 7113:1995) by means of a tensile tester (e.g., AGS-500B available from Shimadzu Corporation) at a tensile speed of 10 mm/min.

Also, the plurality of members constituting the anti-scattering members 45 preferably have a rate of elongation before rupture of 30 to 125%.
Due to this configuration, the impact exerted on the anti-scattering members 45 upon rupture of the housing 1C can be reduced. It is thus possible to prevent destruction of the anti-scattering members 45 themselves and prevent scattering of pieces in a more reliable manner. The elongation rate is more preferably in the range of 100 to 125%. This elongation rate refers to a value measured by stretching a test specimen of a shape specified in Japan Industrial Standard (standard number. JIS K 7113:1995) by means of a tensile tester (e.g., AGS-500B available from Shimadzu Corporation) at a tensile speed of 10 mm/min until the test specimen ruptures, and comparing the dimensions of the test specimen upon the rupture with the original dimensions of the test specimen.

Also, by bonding the anti-scattering members 45 to the housing 1C with an adhesive, the anti-scattering members 45 can be disposed at desired positions. Thus, design flexibility increases.

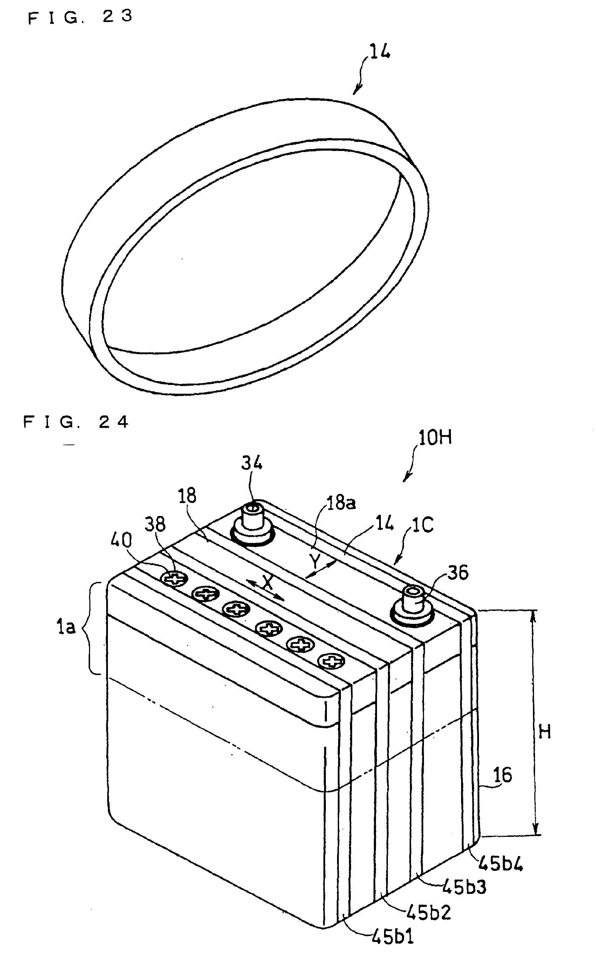

The anti-scattering members 45 can also be composed of, for example, endless-belt-like members as illustrated in FIG. 23, in addition to tape-like (belt-like) members.
Also, the materials for the anti-scattering members 45 vary according to the properties of the electrolyte; however, for example, polyvinyl chloride, polytetrafluoroethylene, imide resins, amido resins, olefin resins, ABS resins, acrylic resins, silicone resins, synthetic rubber, and natural rubber can be used singly or in combination. Further, it is also possible to use composite materials containing a ceramic, a metal such as copper, iron, nickel, aluminum, or stainless steel, and such a resin as described above and having a suitable elongation rate.

Also, when a plurality of tape-like or endless-belt-like members are arranged in parallel to form the anti-scattering members 45, the intervals between the respective members are preferably 15 to 25 mm. In this case, when the battery 10G ruptures due to an increase of the inner pressure, it is possible to prevent the anti-scattering members 45 from being destroyed by the gas issuing therefrom, and prevent scattering of pieces of the battery 10G in a more reliable manner.

The adhesive can be, for example, an adhesive including an acrylic resin, synthetic rubber, a rosin derivative, or a terpene resin. The adhesive strength of the adhesive is preferably 12.5 to 20 N/25 mm (values measured at 23°C). By setting the lower limit of the adhesive strength to the above-mentioned value, even when pieces are produced due to rupture of the housing, it is possible to hold the pieces due to the bonding of the anti-scattering members and prevent scattering of the pieces in a reliable manner. Also, by setting the upper limit of the adhesive strength to the above-mentioned value, when the cover 18 has to be detached from the battery container 16, the anti-scattering members 45 can be removed with a relative ease, and ease of maintenance is increased.

Also, in terms of preventing scattering of pieces in a more reliable manner, it is preferable to provide the anti-scattering members 45 so that a plurality of tape-like or endless-belt-like members traverse all the faces of the housing 1 lengthwise and/or crosswise. Although not clearly illustrated in FIG. 22, in the battery 10G of the illustrated example, a plurality of tape-like or endless-belt-like members are disposed on all of the upper face, four side faces, and bottom face of the housing 1. This can produce the effect of increasing the strength of the housing 1. This effect is an advantage which cannot be ignored when the battery size is large and reinforcing the strength is difficult due to a structural reason.

Also, when the battery 10G is mounted in an automobile or the like, scattering of pieces from the bottom face of the housing 1 is unlikely to occur. Thus, the anti-scattering members 45 can also be disposed only on the upper face and four side faces of the housing 1 excluding the bottom face of the housing 1.

Also, an electrolyte is usually injected into the battery container 16 so that the liquid level is 70 to 80% of the depth H of the battery container 16. Thus, the part of the housing 1C above the electrolyte level forms a gas-retaining portion 1a in which gases such as air are retained, while the part below it forms a liquid retaining portion 1 c. In FIG. 22, an example of the lower limit position of the gas-retaining portion 1 a, i.e., the position of the electrolyte level, is shown by the dot-dot dashed line. The gas-retaining portion 1a is a portion in which an explosion occurs when the housing 1C ruptures, since gases (e.g., hydrogen and oxygen) generated upon overcharge or reverse connection build up therein. Therefore, the gas-retaining portion 1a is more susceptible to destruction than the other portion when the housing 1C ruptures.

Therefore, it is highly necessary to provide the gas-retaining portion 1 a of the housing 1C, i.e., the upper face of the housing 1C and the upper approximately 20 to 30% portions of the side faces of the housing 1C, with the anti-scattering members 45. It is also preferable to cover 70 to 95% of the total area of the outer faces of the gas-retaining portion 1 a with the anti-scattering members 45. In this case, when the housing 1C ruptures due to an increase of the inner pressure, it is possible to release the gas issuing therefrom in a more reliable manner. This makes it possible to avoid destruction of the anti-scattering members 45 themselves and prevent scattering of pieces of the housing 1C in a more reliable manner.

Also, only the outer faces of the gas-retaining portion 1 a can be provided with the anti-scattering members 45. This makes it possible to dramatically improve the safety of the secondary battery without unnecessarily increasing the total weight and volume.
Also, when the anti-scattering members 45 are composed of tape-like members, it is also preferable to bond these members to the upper face of the housing 1C and dispose both ends of these members below the lower limit position of the gas-retaining portion 1a on the side faces of the housing 1C. i.e., below the electrolyte level. In this case, pieces produced from the gas-retaining portion 1a, which is susceptible to destruction, can be held by the liquid retaining portion 1 c, which is not susceptible to destruction. Also, this does not unnecessarily increase the total weight and volume.

Further, when the cover 18 is provided with the electrode terminals 34 and 36 and the electrolyte injection holes 38, it is preferable to dispose the anti-scattering members 45 so as to avoid them, in consideration of the access thereto. In this case, the safety of the secondary battery and its handleability can be improved in a good balance.

In addition, the arrangement of the anti-scattering members 45 on the housing 1C is not limited to the arrangement in which a plurality of tape-like or endless-beft-like members are crossed lengthwise and crosswise on the upper face of the housing 1C. As in a battery 10H illustrated in FIG. 24, the anti-scattering members 45 can also be composed only of members 45b1 to 45b4, which are parallel to the longitudinal direction X of the housing 1C on the upper face of the housing 1C. Alternatively, the anti-scattering members 45 can also be composed only of members 45a1 to 45a5, which are parallel to the width direction Y of the housing 1C on the upper face of the housing 1C.

Examples according to Embodiment 8 are described below. The invention is not to be construed as being limited to the following Examples.

### (Example 21)

A commercially available secondary battery of type 80D26 (available from Panasonic Corporation) according to JIS D 5301 (starter battery) was prepared. The secondary battery had dimensions of 260 × 173 × 202 mm and a total height (including electrode terminals and the like) of 225 mm.
A tape made of polyvinyl chloride with a thickness of 0.2 mm and a width of 20 mm (hereinafter referred to as polyvinyl chloride tape) was prepared as the material of the anti-scattering members 45. An acrylic resin was prepared as the adhesive.

The tape was cut to a suitable length to produce a plurality of members. They were affixed to the outer faces of the housing with the adhesive. The arrangement thereof was similar to the arrangement of the tape illustrated in FIG. 22. More specifically, on the upper face of the housing, six tapes were aligned in the longitudinal direction X in parallel, while four tapes were aligned in the width direction Y in parallel. The respective tapes were bonded so as to go around the housing. In this manner, the anti-scattering members 45 were formed. At this time, the intervals between the parallel tapes were set to 20 mm, and 70% of the outer faces of the gas-retaining portion of the housing were covered with the anti-scattering members.

Also, the rupture strength of the tape, the rate of elongation of the tape before rupture, and the adhesive strength of the adhesive were measured in advance. The rupture strength of the adhesive was 45 N/25 mm. The elongation rate was 100%. The adhesive strength of the adhesive was 12.5 N/25 mm. In this manner, the secondary battery of Example 21 was produced.

### (Example 22)

A secondary battery was produced in the same manner as in Example 21, except that a tape made of a polyimide with a thickness of 0.08 mm and a width of 20 mm (hereinafter referred to as "imide tape") was used as the material of the anti-scattering members 45. The rupture strength of the tape was 50 N/25 mm. The elongation rate was 20%. The adhesive strength of the adhesive was 14 N/25 mm.

### (Example 23)

A secondary battery was produced in the same manner as in Example 21, except that a tape comprising a polypropylene synthetic label with a thickness of 0.2 mm and a width of 20 mm was used as the material of the anti-scattering members 45, and that an acrylic resin was used as the adhesive. The polypropylene synthetic label is a product which is composed mainly of a synthetic resin, but has the properties of paper composed mainly of wood pulp (in particular, appearance such as whiteness and opacity, extensive printability, and processability) while maintaining the properties of the synthetic resin. It is usually produced by mixing a synthetic resin, a filler, and an additive, melting and kneading them with an extruder, and extruding the resulting mixture from the die slit to form a film.
The rupture strength of the tape was 125 N/25 mm. The elongation rate was 30%. The adhesive strength of the adhesive was 13.5 N/25 mm.

### (Example 24)

Using the same material of the anti-scattering members and the same adhesive as those of Example 21, mainly the outer faces of the gas-retaining portion of the housing were provided with anti-scattering members. That is, both ends of a plurality of tape-like members constituting the anti-scattering members were disposed below the electrolyte level (the position shown by the dot-dashed line of FIG. 22) by a predetermined length (e.g. 1 to 2 cm). Except for this, in the same manner as in Example 21, a secondary battery was produced.

### (Comparative Example 7)

A commercially available secondary battery, which was the same as that of Example 21, was prepared. No anti-scattering member was used.

### (Reference Example 8)

A commercially available secondary battery, which was the same as that of Example 21, was prepared. A 0.7-mm diameter stainless steel wire was prepared. The wire was wrapped one tum at the same positions as those of the tapes in Example 21. No adhesive was used. The rupture load of the wire was 20 kgf (approximately 196 N).

### (Reference Example 9)

A commercially available secondary battery, which was the same as that of Example 21, was prepared. 5-mm diameter rubber bands were prepared. The rubber bands were fitted one by one to the same positions as those of the anti-scattering members 45 in FIG. 1. No adhesive was used. The rupture strength of the rubber bands was 435 N/25 mm. The elongation rate was 150%.

### (Reference Example 10)

A commercially available secondary battery, which was the same as that of Example 21, was prepared. A tape made of aluminum with a thickness of 0.1 mm and a width of 20 mm (hereinafter referred to as aluminum tape) was prepared. The aluminum tape was affixed to the same positions as those of the polyvinyl chloride tape in Example 21 by using the same adhesive.
The rupture strength of the tape was 80 N/25 mm. The elongation rate was 7%. The adhesive strength of the adhesive was 15 N/25 mm.

### (Reference Example 11)

A commercially available secondary battery, which was the same as that of Example 21, was prepared. A tape comprising a polypropylene synthetic label with a thickness of 0.2 mm and a width of 20 mm was prepared. The tape was affixed to the same positions as those of Example 23, by using, as the adhesive, an acrylic resin having a lower adhesive strength than the adhesive of Example 23. The adhesive strength of the adhesive was 5 N/25 mm.

Three secondary batteries produced in each of Examples 21 to 24, Comparative Example 7, and Reference Examples 8 to 11 were subjected to the same rupture test as that of Example 1, to observe the state of scattering of pieces.
The above results are shown in Table 4.

**[Table 4]**

| | Anti-scattering member | | | Position | Adhesive | | Result | |
|---|---|---|---|---|---|---|---|---|
| | Material | Rupture strength (N/mm) | Elongation rate (%) | | Material | Adhesive strength (N/25 mm) | Size of pieces | Scattered or not |
| EX 21 | Polyvinyl chloride tape | 45 | 100 | Whole housing | Acrylic resin | 12.5 | No pieces | Not scattered |
| EX 22 | Imide tape | 50 | 20 | Whole housing | Acrylic resin | 14 | Small | Not scattered |
| EX 23 | Polypropylene synthetic label | 125 | 30 | Whole housing | Acrylic resin | 13.5 | Small | Not scattered |
| EX 24 | Polyvinyl chloride tape | 45 | 100 | Gas-retaining portion | Acrylic resin | 12.5 | No pieces | Not scattered |
| COM EX 7 | None | | | - | None | | Large | Scattered |
| COM EX 8 | Wire | - | - | Whole housing | None | | Medium | △ |
| COM EX 9 | Rubber band | 435 | 150 | Whole housing | None | | Medium | △ |
| COM EX 10 | Aluminum tape | 80 | 7 | Whole housing | Acrylic resin | 15 | Medium | Scattered |
| EX 11 | Polypropylene synthetic label | 125 | 30 | Whole housing | Acrylic resin | 5 | Medium | Scattered |

In Example 21, in which the anti-scattering members 45 comprised the polyvinyl chloride tape, even when the housing 1C ruptured, pieces were not produced, nor did pieces scatter.
Contrary to this, in Comparative Example 7, in which the secondary battery was not provided with any anti-scattering member, when the secondary battery ruptured, various pieces including large and small ones were produced, and they scattered at a high speed. Some of the large pieces had an area of more than 49 cm².

Also, in Reference Examples 8 and 9, in which no adhesive was used, medium pieces (pieces with areas of 9 to 49 cm²) were produced. However, the energy of these pieces was reduced by the anti-scattering members, and they hardly scattered. Also, some of the pieces scattered, but at a very low speed. This is represented by the symbol △ in Table 4.

Reference Example 10, in which the aluminum tape was used, some parts of the tapes ruptured, so that medium pieces were produced from the ruptured parts and the pieces scattered. The reason of the rupture of the aluminum tape in Reference Example 10 is probably that the aluminum tape has a very small elongation rate. That is, due to the very small elongation rate of the aluminum tape, the tape itself broke into short pieces due to the impact of the rupture and could not hold the pieces. From this result, it can be understood that the use of a material having a more suitable elongation rate as the anti-scattering member is important.

In Reference Example 11, the polypropylene synthetic label is used in the same manner as in Example 23. In Reference Example 11, the tape peeled, and medium pieces were produced from the peeled parts. The pieces scattered. The reason of the peeling of the tape in Reference Example 11 is probably that the adhesive strength of the adhesive is 5 to 7.5 N/25 mm, which is small.

In Examples 22 and 23, small pieces (pieces with areas of less than 9 cm²) were produced, but these pieces were held by the anti-scattering members and did not scatter. In Example 24, pieces were not produced, nor did pieces scattered, in the same manner as in Example 21.

Examples 22 to 24 are analyzed in more details. In Example 22, the imide tape is used as the anti-scattering members. In Example 22, the tape also ruptured, and small pieces were produced from the ruptured parts. However, the tape did not break into short pieces, and pieces did not scatter. Thus, it was found that the safety was improved over Reference Examples 9 to 11. The imide tape has a lower rupture strength than the polyvinyl chloride tape, which is believed to be the reason of rupture. From this result, it can be understood that the use of a material having a more suitable rupture strength as the anti-scattering member is important.

In Example 23, the polypropylene synthetic label is used as the anfi-scattering members. The adhesive used in Example 23 had a higher adhesive strength than that of Reference Example 11. Thus, the tape did not peel off. Also, small pieces were produced, but the pieces were held by the tape and did not scatter. Therefore, it was found that the safety was improved over Reference Example 11. From this result, it can be understood that the use of an adhesive having a more suitable adhesive strength to bond the anti-scattering members is important.

In Example 24, mainly the gas-retaining portion of the housing of the secondary battery was provided with the anti-scattering members 45. In Example 24, also, pieces were not produced, and pieces did not scatter. This indicates that it is important to provide the anti-scattering members for the portion which is susceptible to destruction when the secondary battery ruptures.

In the above-described Embodiment 8 of the invention and related Examples, it is also possible to provide the anti-scattering members 45 of Embodiment 8 for the battery 10 of FIG. 1. This produces a synergistic effect in suppressing scattering, thereby allowing almost complete prevention of scattering of pieces.

Next, Embodiment 9 of the invention is described.

### (Embodiment 9)

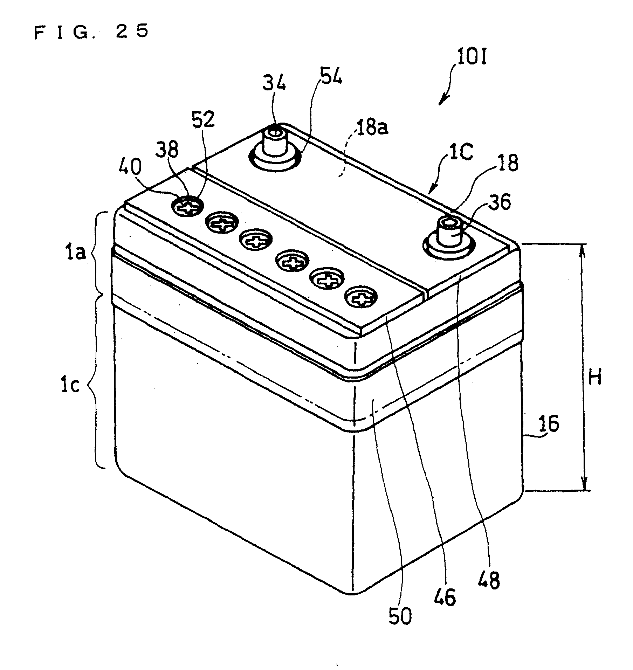

FIG. 25 is a perspective view schematically showing the structure of a secondary battery according to Embodiment 9 of the invention. It should be noted that the state of the secondary battery of FIG. 25 from which the anti-scattering mechanism is removed is the same as that illustrated in FIG. 18.

In a battery 101 of FIG. 25, the peripheral thinned portions 11 and the central thinned portion 15 are removed from the battery 10 of FIG. 1, and instead, anti-scattering members 46, 48, and 50 are provided.

As described above, it is highly necessary to provide the gas-retaining portion 1a of the housing 1C with anti-scattering members. In the battery 101, also, the anti-scattering members 46, 48, and 50 are disposed mainly on the outer faces of the gas-retaining portion 1a.

The anti-scattering members 46, 48, and 50 are composed of a plurality of members of a predetermined shape (rectangular or tape shape in the illustrated example). The plurality of members are disposed independently on the cover 18 and the battery container 16 so as to release the gas issuing from the housing 1C when the housing 1C ruptures.

More specifically, the anti-scattering members 46 and 48 are affixed to the top plate 18a of the cover 18 with an adhesive. The anti-scattering member 50 is affixed to the upper part of the battery container 16 with the adhesive in such a manner that it goes around the gas-retaining portion 1a of the battery container 16 in the horizontal direction. The lower part of the anti-scattering member 50 is affixed to the outer faces of the liquid retaining portion 1 c.

As illustrated in FIG. 25, by disposing the respective anti-scattering members 46, 48, and 50 so as to reinforce the whole gas-retaining portion 1 a, when the battery 12 ruptures due to an increase of the inner pressure, the portion of the housing 1C most susceptible to destruction can be reinforced. This makes it possible to prevent the housing 1C from being destroyed more severely than necessary for releasing the internal gas and prevent production of relatively large pieces. It is thus possible to prevent scattering of such pieces. As a result, the safety of the secondary battery can be effectively enhanced without unnecessarily increasing the total weight and volume.

The anti-scattering member 46 is provided with a plurality (six in the illustrated example) of holes 52 for exposing the electrolyte injection holes 38. Also, the anti-scattering member 48 is provided with two holes 54 for exposing the electrode terminals 34 and 36. This facilitates the access to the electrode terminals 34 and 36 and the electrolyte injection holes 38, making it possible to improve the safety of the secondary battery and its handleability in a good balance.

By providing the anti-scattering members 46, 48, and 50 composed of mutually independent members, when the housing 1C ruptures due to an increase of the inner pressure, it is possible to release the high pressure gas issuing therefrom. At the same time, it is possible to prevent destruction of the anti-scattering members 46, 48, and 50 themselves and suppress scattering of pieces.

Also, the anti-scattering members 46,48. and 50 are affixed to the housing 1C. Thus, when the housing 1C is severely destroyed into pieces, the pieces can be held by the anti-scattering members 46, 48, and 50. Thus, scattering of the pieces can be prevented. Further, where the anti-scattering members 46, 48, and 50 are affixed to the housing 1C, the anti-scattering members 46, 48, and 50 and the housing 1C reinforce each other. It is thus possible to prevent the housing 1C from being destroyed more severely than necessary. This can also produce the effect of increasing the strength of the housing 1C. This effect is an advantage which cannot be ignored when the battery size is large and reinforcing the strength is difficult due to a structural reason. As such, the safety of the secondary battery is improved.

Also, the lower part of the anti-scattering member 50 is affixed to the outer faces of the liquid retaining portion 1c. Thus, when the gas-retaining portion 1 a is destroyed, pieces thereof can be held by the liquid retaining portion 1 c, which is not susceptible to destruction, and the safety is improved.

It is preferable to cover 23 to 54% of the total area of the outer faces of the gas-retaining portion 1 a with the anti-scattering members 46, 48, and 50. In this case, when the battery 12 ruptures due to an increase of the inner pressure, it is possible to avoid destruction of the anti-scattering members 46, 48, and 50 themselves by the gas issuing therefrom, and prevent scattering of pieces of the battery 12 in a more reliable manner.

Also, the members constituting the anti-scattering members 46, 48, and 50 are not limited to tape-like (belt-like) members, and can be shaped like endless belts, linear, and rectangular. These members are more preferably bonded to the housing 1C, but they can be simply wrapped around the housing 1C. For example, even when rubber bands or wires are simply wrapped around the housing 1C, it is possible to suppress scattering of large pieces at a high speed when the housing 1C ruptures due to an increase of the inner pressure.

To achieve the above-described effects in a more reliable manner, the anti-scattering members 46, 48, and 50 preferably have a rupture strength of 37.5 to 150 N/25 mm. This rupture strength is measured by stretching a test specimen of a shape specified in Japan Industrial Standard (standard number: JIS K 7113:1995) by means of a tensile tester (e.g., AGS-500B available from Shimadzu Corporation) at a tensile speed of 10 mm/min.

Also, the anti-scattering members 46, 48, and 50 preferably have a rate of elongation before rupture of 30 to 125%.
Due to this configuration, the impact exerted on the anti-scattering members 46, 48, and 50 upon rupture of the housing 1C can be reduced. It is thus possible to prevent destruction of the anti-scattering members 46, 48, and 50 themselves and prevent scattering of pieces in a more reliable manner. The elongation rate is more preferably in the range of 100 to 125%. This elongation rate is measured by stretching a test specimen of a shape specified in Japan Industrial Standard (standard number: JIS K 7113:1995) by means of a tensile tester (e.g., AGS-500B available from Shimadzu Corporation) at a tensile speed of 10 mm/min until the test specimen ruptures, and comparing the dimensions of the test specimen upon the rupture with the original dimensions of the test specimen.

Also, when the anti-scattering members 46.48, and 50 are affixed to the housing 1C with an adhesive, the anti-scattering members 46, 48, and 50 can be disposed at desired locations. Hence, design flexibility increases.

The materials of the anti-scattering members 46, 48, and 50 vary according to the properties of the electrolyte; however, polyvinyl chloride, polytetrafluoroethylene, imide resins, amido resins, olefin resins, ABS resins, acrylic resins, silicone resins, copper, iron, nickel, aluminum, stainless steel, synthetic rubber, natural rubber, etc. can be used singly or in combination. Further, composite materials containing a ceramic and such a resin as described above can also be used.

Also, when a plurality of tape-like, endless-belt-like, or rectangular members are arranged in parallel to form the anti-scattering members 46, 48, and 50, the intervals between the respective members are preferably 15 to 25 mm. In this case, when the housing 1C ruptures due to an increase of the inner pressure, it is possible to prevent the anti-scattering members 46, 48, and 50 from being destroyed by the gas issuing therefrom, and prevent scattering of pieces of the housing 1C in a more reliable manner.

The adhesive includes an acrylic resin, synthetic rubber, a rosin derivative, or a terpene resin. The adhesive strength of the adhesive is preferably 12.5 to 20 N/25 mm (values measured at 23°C). By setting the lower limit of the adhesive strength to the above-mentioned value, scattering of pieces can be prevented in a reliable manner. Also, by setting the upper limit of the adhesive strength to the above-mentioned value, when the cover 18 has to be detached from the battery container 16, the anti-scattering members 46, 48, and 50 can be removed with a relative ease, and ease of maintenance is increased.

Next, Embodiment 10 of the invention is described.

### (Embodiment 10)

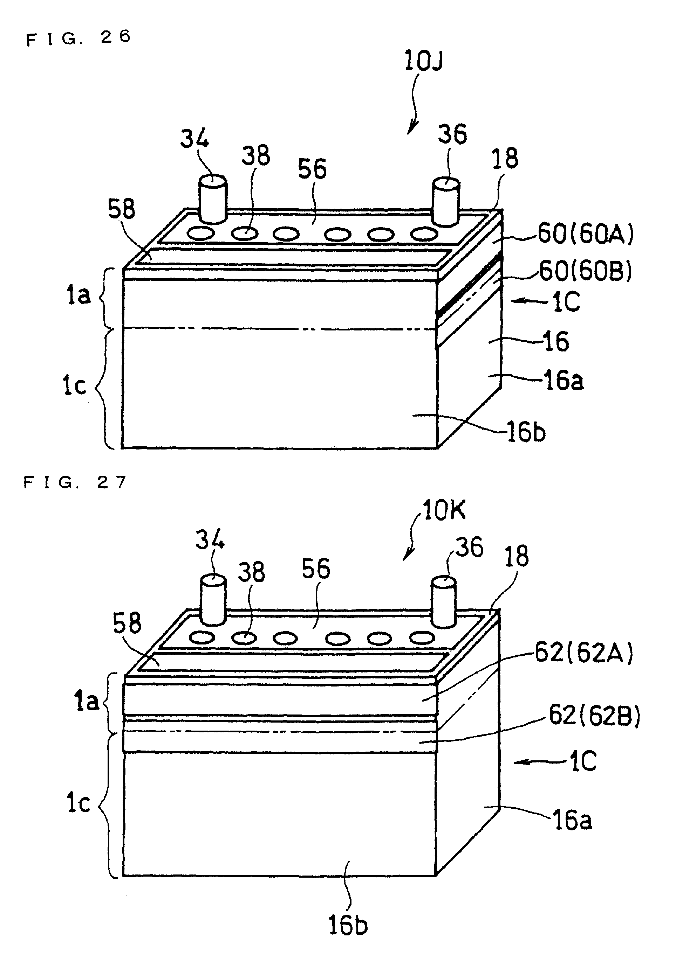

FIG. 26 is a perspective view schematically showing the structure of a secondary battery according to Embodiment 10 of the invention. It should be noted that the state of the secondary battery of FIG. 26 from which the anti-scattering mechanism is removed is basically the same as that illustrated in FIG. 18.

In a battery 10J of FIG. 26, the peripheral thinned portions 11 and the central thinned portion 15 are removed from the battery 10 of FIG. 1, and instead, anti-scattering members 56,58, and 60 are provided.

The anti-scattering members 56 and 58 are tape-like or rectangular members, and are affixed to the top plate 18a of the cover 18 with an adhesive.
The anti-scattering members 60 (60A and 60B) are tape-like members, and are affixed to the side faces of the battery container 16 with the adhesive.

The anti-scattering member 56 is provided with holes at positions corresponding to the portions having the terminals 34 and 36 and the respective electrolyte injection holes 38. This facilitates the access to the terminals 34 and 36 and the respective electrolyte injection holes 38.

The anti-scattering members 60 (60A and 60B) are disposed only on two opposing narrower side faces 16a of the battery container 16 and are not disposed on two opposing wider side faces 16b of the battery container 16.

The whole anti-scattering member 60A is disposed on the side face of the battery container 16 above the electrolyte level.
A part of the anti-scattering member 60B is disposed on the side face of the battery container 16 above the electrolyte level, and the other part thereof is disposed below the electrolyte level. Therefore, when the housing 1C ruptures due to an increase of the inner pressure, pieces produced from the gas-retaining portion 1 a can be held by the liquid retaining portion 1c, which is not susceptible to destruction.

The materials and physical properties of the anti-scattering members 56, 58, and 60 can be the same as those in Embodiment 9. Also, the materials and physical properties of the adhesive can also be the same as those in Embodiment 9.

Next, Embodiment 11 of the invention is described.

### (Embodiment 11)

FIG. 27 is a perspective view schematically showing the structure of a secondary battery according to Embodiment 11 of the invention. It should be noted that the state of the secondary battery of FIG. 27 from which the anti-scattering mechanism is removed is basically the same as that illustrated in FIG. 18.

In a battery 10K of FIG. 27, the peripheral thinned portions 11 and the central thinned portion 15 are removed from the battery 10 of FIG. 1, and instead, anti-scattering members 56,58, and 62 are provided. The anti-scattering members 56 and 58 are the same as the anti-scattering members 56 and 58 of the battery 10J of FIG. 26.

The anti-scattering members 62 (62A and 62B) are the same as the anti-scattering members 60 of the battery 10J in the material they are made of and in that they are affixed to the upper side faces of the battery container 16. The anti-scattering members 62 (62A and 62B) are different from the anti-scattering members 60 in that the anti-scattering members 62 are disposed only on two opposing wider side faces 16b of the battery container 16 and are not disposed on two opposing narrower side faces 16a of the battery container 16.

The whole anti-scattering member 62A is disposed on the side face of the battery container 16 above the electrolyte level.
A part of the anti-scattering member 62B is disposed on the side face of the battery container 16 above the electrolyte level, and the other part thereof is disposed below the electrolyte level. Therefore, when the housing 1C ruptures due to an increase of the inner pressure, pieces produced from the gas-retaining portion 1a can be held by the liquid retaining portion 1c, which is not susceptible to destruction.

The materials and physical properties of the anti-scattering members 56,58, and 62 can be the same as those in Embodiment 9. Also, the materials and physical properties of the adhesive can also be the same as those in Embodiment 9.

Next, Embodiment 12 of the invention is described.

### (Embodiment 12)

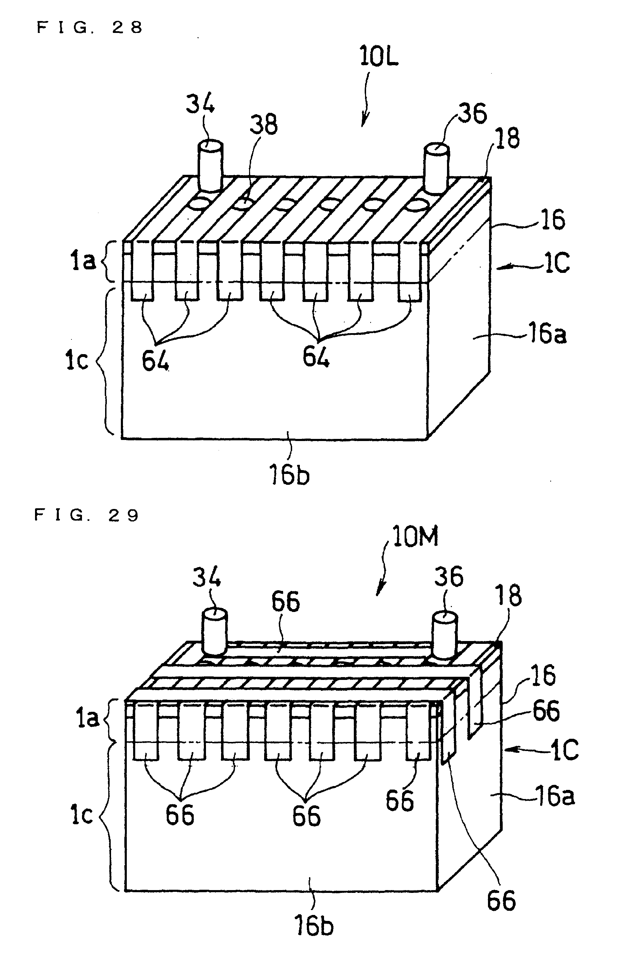

FIG. 28 is a perspective view schematically showing the structure of a secondary battery according to Embodiment 12 of the invention. It should be noted that the state of the secondary battery of FIG. 28 from which the anti-scattering mechanism is removed is basically the same as that illustrated in FIG. 18.

In a battery 10L of FIG. 28, the peripheral thinned portions 11 and the central thinned portion 15 are removed from the battery 10 of FIG. 1, and instead, a predetermined number (seven in the illustrated example) of anti-scattering members 64 are provided.

The anti-scattering members 64 are tape-like members and are affixed to the upper part of the housing 1C with an adhesive. More specifically, the respective anti-scattering members 64 are disposed in parallel so as to extend over the cover 18 and the two opposing wider side faces 16b of the battery container 16. The anti-scattering members 64 are not disposed on the two opposing narrower side faces 16a of the battery container 16.

Both ends of the anti-scattering members 64 are disposed below the electrolyte level on the side faces of the battery container 16 by a predetermined length (e.g., 1 to 2 cm). Therefore, when the housing 1C ruptures due to an increase of the inner pressure, pieces produced from the gas-retaining portion 1 a can be held by the liquid retaining portion 1 c, which is not susceptible to destruction.

Further, the anti-scattering members 64 are provided so as to avoid the portions of the cover 18 having the electrode terminals 34 and 36 and the electrolyte injection holes 38. This facilitates the access to the electrode terminals 34 and 36 and the electrolyte injection holes 38, making it possible to improve the safety of the secondary battery and its handleability in a good balance. Also, the anti-scattering members 64 are aligned in parallel at predetermined intervals (10 to 20 mm). This makes it possible to release the gas inside the battery to outside and prevent scattering of pieces.

Next, Embodiment 13 of the invention is described.

### (Embodiment 13)

FIG. 29 is a perspective view schematically showing the structure of a secondary battery according to Embodiment 13 of the invention. It should be noted that the state of the secondary battery of FIG. 29 from which the anti-scattering mechanism is removed is basically the same as that illustrated in FIG.18.

In a battery 10M of FIG. 29, the peripheral thinned portions 11 and the central thinned portion 15 are removed from the battery 10 of FIG. 1, and instead, anti-scattering members 66 are provided. The anti-scattering members 66 are tape-like members, and are affixed to the upper part of the housing 1C with an adhesive.

More specifically, a predetermined number (seven in the illustrated example) of anti-scattering members 66 are disposed in parallel so as to extend over the cover 18 and the two opposing wider side faces 16b of the battery container 16.
Also, a predetermined number (two in the illustrated example) of anti-scattering members 66 are disposed in parallel so as to extend over the cover 18 and the two opposing narrower side faces 16a of the battery container 16.

Further, a predetermined number (one in the illustrated example) of anti-scattering member(s) 66 is/are disposed on the top plate 18a of the cover 18 in parallel with the longitudinal direction X of the cover 18. This anti-scattering member 66 is provided between the terminal 34 and the terminal 36.

Also, both ends of a total of nine anti-scattering members 66 extending over the cover 18 and the side faces 16a or 16b are disposed below the electrolyte level on the side faces of the battery container 16 by a predetermined length (e.g., 1 to 2 cm). Therefore, when the housing 1C ruptures due to an increase of the inner pressure, pieces produced from the gas-retaining portion 1a can be held by the liquid retaining portion 1c, which is not susceptible to destruction.

Further, the anti-scattering members 66 are provided so as to avoid the electrode terminals 34 and 36 and the electrolyte injection holes 38 of the cover 18. This facilitates the access to the electrode terminals 34 and 36 and the electrolyte injection holes 38, making it possible to improve the safety of the secondary battery and its handleability in a good balance. Also, the anti-scattering members 66 are aligned in parallel at predetermined intervals (10 to 20 mm). This makes it possible to release the gas inside the battery to outside and prevent scattering of pieces.

Next, Embodiment 14 of the invention is described.

### (Embodiment 14)

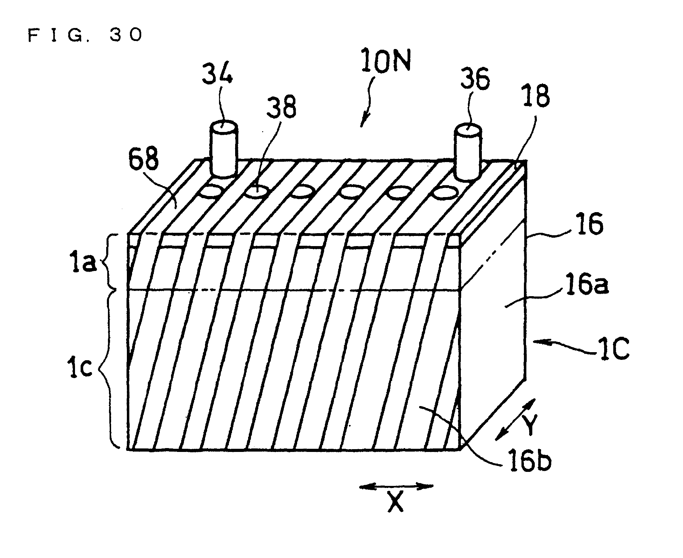

FIG. 30 is a perspective view schematically showing the structure of a secondary battery according to Embodiment 14 of the invention. It should be noted that the state of the secondary battery of FIG. 30 from which the anti-scattering mechanism is removed is basically the same as that illustrated in FIG. 18.

In a battery 10N of FIG. 30, the peripheral thinned portions 11 and the central thinned portion 15 are removed from the battery 10 of FIG. 1, and instead, an anti-scattering member 68 is provided.
The anti-scattering member 68 is composed of one tape-like member, and is affixed to the upper face, two wider side faces 16b, and bottom face of the housing 1C with an adhesive in such a manner that it forms a helix in the longitudinal direction X of the housing 1C.

The anti-scattering member 68 is slanted relative to the vertical direction of the battery container 16 on one of the two wider side faces 16b of the housing 1C (the face on the front side in FIG. 30). On the other of the two wider side faces 16b of the housing 1C (the face on the rear side not illustrated in FIG. 30), the anti-scattering member 68 is parallel to the vertical direction of the battery container 16. Therefore, when the housing 1C ruptures due to an increase of the inner pressure, pieces produced from the gas-retaining portion 1 a can be held by the liquid retaining portion 1 c, which is not susceptible to destruction.
The anti-scattering member 68 is not disposed on the two narrower side faces 16a of the battery container 16.

Further, the anti-scattering member 68 is provided so as to avoid the electrode terminals 34 and 36 and the electrolyte injection holes 38 of the cover 18. This facilitates the access to the electrode terminals 34 and 36 and the electrolyte injection holes 38, making it possible to improve the safety of the secondary battery and its handleability in a good balance. Also, the anti-scattering member 68 is wrapped around in parallel at predetermined intervals (10 to 20 mm). This makes it possible to release the gas inside the battery to outside and prevent scattering of pieces.

Next, Embodiment 15 of the invention is described.

### (Embodiment 15)

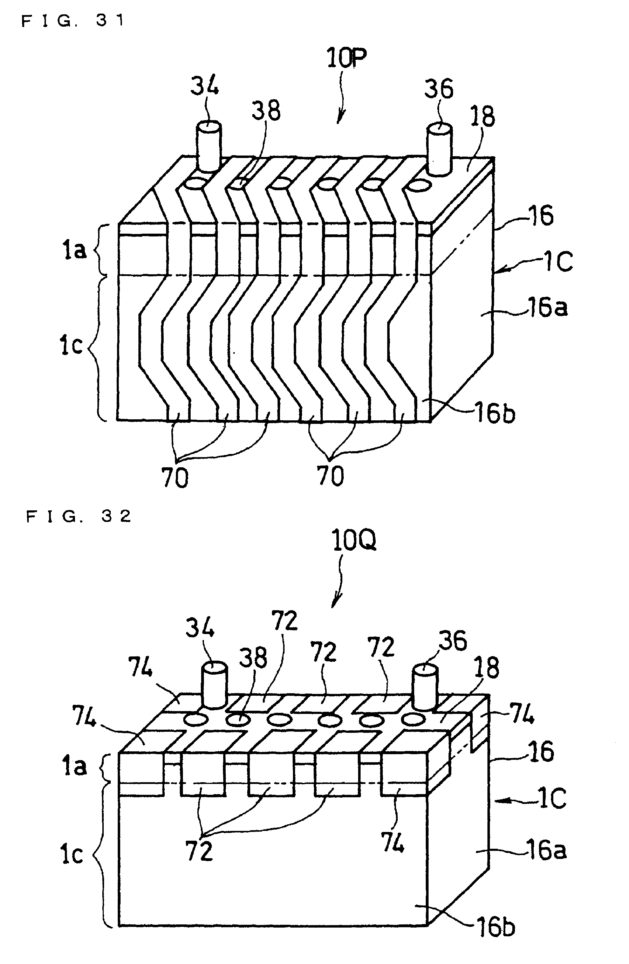

FIG. 31 is a perspective view schematically showing the structure of a secondary battery according to Embodiment 15 of the invention. It should be noted that the state of the secondary battery of FIG. 31 from which the anti-scattering mechanism is removed is basically the same as that illustrated in FIG.18.

In a battery 10P of FIG. 31, the peripheral thinned portions 11 and the central thinned portion 15 are removed from the battery 10 of FIG.1, and instead, tape-like anti-scattering members 70 are provided.
The anti-scattering members 70 are affixed to the outer faces of the housing 1C excluding the bottom.

More specifically, the anti-scattering members 70 are disposed in parallel so as to extend over the cover 18 and the two wider side faces 16b of the battery container 16 while meandering. As a result, the anti-scattering members 70 are provided with some slack, and rapid destruction is prevented.
The anti-scattering members 70 are not disposed on the two narrower side faces 16a of the battery container 16.

Also, both ends of the anti-scattering members 70 are aligned with the lower end of the side faces of the battery container 16. Therefore, when the housing 1C ruptures due to an increase of the inner pressure, pieces produced from the gas-retaining portion 1 a can be held by the liquid retaining portion 1c, which is not susceptible to destruction.

Further, the anti-scattering members 70 are provided so as to avoid the electrode terminals 34 and 36 and the electrolyte injection holes 38 of the cover 18. This facilitates the access to the electrode terminals 34 and 36 and the electrolyte injection holes 38, making it possible to improve the safety of the secondary battery and its handleability in a good balance. Also, the anti-scattering members 70 are aligned in parallel at predetermined intervals (10 to 20 mm). This makes it possible to release the gas inside the battery to outside and prevent scattering of pieces.

Next, Embodiment 16 of the invention is described.

### (Embodiment 16)

FIG. 32 is a perspective view schematically showing the structure of a secondary battery according to Embodiment 16 of the invention. It should be noted that the state of the secondary battery of FIG. 32 from which the anti-scattering mechanism is removed is basically the same as that illustrated in FIG. 18.

In a battery 10Q of FIG. 32, the peripheral thinned portions 11 and the central thinned portion 15 are removed from the battery 10 of FIG. 1, and instead, tape-like or rectangular anti-scattering members 72 and 74 are provided. The anti-scattering members 72 and 74 are affixed to the upper outer faces of the housing 1C with an adhesive.

More specifically, three anti-scattering members 72 are disposed in parallel so as to extend over the cover 18 and one of the two wider side faces 16b of the battery container 16. Also, three anti-scattering members 72 are disposed in parallel so as to extend over the cover 18 and the other of the two wider side faces 16b of the battery container 16.

Further, four anti-scattering members 74 are disposed so as to cover the intersection points of the top plate 18a of the cover 18 and the two adjacent side faces 16a and 16b, i.e., the upper four corners of the housing 1C.
The lower ends of all the anti-scattering members 72 and 74 are disposed below the electrolyte level on the side faces of the battery container 16 by a predetermined length (e.g., 1 to 2 cm). Therefore, when the housing 1C ruptures due to an increase of the inner pressure, pieces produced from the gas-retaining portion 1 a can be held by the liquid retaining portion 1 c, which is not susceptible to destruction.

The anti-scattering members 72 and 74 are provided so as to avoid the electrode terminals 34 and 36 and the electrolyte injection holes 38 of the cover 18. This facilitates the access to the electrode terminals 34 and 36 and the electrolyte injection holes 38, making it possible to improve the safety of the secondary battery and its handleability in a good balance. Also, the anti-scattering members 72 and 74 are aligned in parallel at predetermined intervals (10 to 20 mm). This makes it possible to release the gas inside the battery to outside and prevent scattering of pieces.

By disposing the anti-scattering members 72 and 74 as described above, the corners of the gas-retaining portion 1a are reinforced. This makes it possible to increase the ruggedness of the gas-retaining portion 1a. It is thus possible to prevent production of large pieces in a more reliable manner.

Next, Embodiment 17 of the invention is described.

### (Embodiment 17)

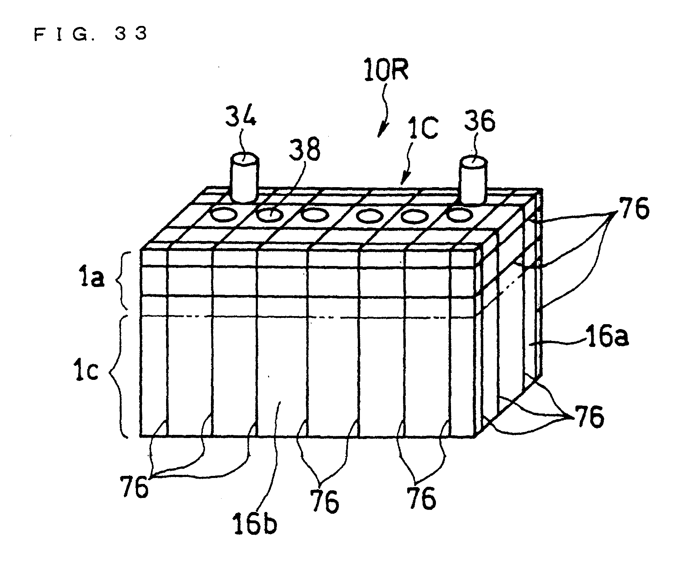

FIG. 33 is a perspective view schematically showing the structure of a secondary battery according to Embodiment 9 of the invention. It should be noted that the state of the secondary battery of FIG. 33 from which the anti-scattering mechanism is removed is basically the same as that illustrated in FIG. 18.

In a battery 10R of FIG. 33, the peripheral thinned portions 11 and the central thinned portion 15 are removed from the battery 10 of FIG. 1, and instead, anti-scattering members 76 comprising metal wire rods (e.g. wires) are provided. The anti-scattering members 76 are wrapped around the outer faces of the housing 1C. This makes it possible to form a strong anti-scattering structure at a low cost.

More specifically, a predetermined number (seven in the illustrated example) of anti-scattering members 76 are provided in parallel at equal intervals in such a manner that they go around the cover 18, the two wider side faces 16b of the battery container 16, and the bottom face. Also, a predetermined number (four in the illustrated example) of anti-scattering members 76 are provided in parallel at equal intervals in such a manner that they go around the cover 18, the two narrower side faces 16a of the battery container 16, and the bottom face.

Further, a predetermined number (two in the illustrated example) of anti-scattering members 76 are provided in parallel at predetermined intervals in such a manner that they go around the gas-retaining portion 1 a in the horizontal direction.
The anti-scattering members 76 are not limited to wires, and can be rubber bands. That is, the anti-scattering members 76 can also be composed of elastic materials such as rubber bands.

Examples of the invention according to Embodiments 9 to 17 are hereinafter described. The invention is not to be construed as being limited to the following Examples.

### (Example 25)

A commercially available secondary battery of type 80D26 (available from Panasonic Corporation) according to JIS D 5301 (starter battery) was prepared. The secondary battery had dimensions of 260 × 173 × 202 mm and a total height (including electrode terminals and the like) of 225 mm.
A tape made of polyvinyl chloride with a thickness of 0.2 mm and a width of 20 mm (hereinafter referred to as polyvinyl chloride tape) and rectangular sheets made of polyvinyl chloride (hereinafter referred to as polyvinyl chloride sheets) were prepared as the anti-scattering members. An acrylic resin was prepared as the adhesive.

They were bonded to the outer faces of the housing with the adhesive. The arrangement thereof was the same as that of the members illustrated in FIG. 25. That is, two rectangular anti-scattering members 46 and 48 were affixed to the top plate, and one tape-like anti-scattering member 50 was affixed so as to go around the gas-retaining portion 1a in the horizontal direction. The anti-scattering members 46 and 48 were provided with holes at positions corresponding to the electrolyte injection holes and the electrode terminals. The anti-scattering members 46, 48, and 50 covered 23% of the outer faces of the gas-retaining portion 1a.

Also, the rupture strength of the anti-scattering members 46, 48, and 50, the rate of elongation before rupture, and the adhesive strength of the adhesive were measured in advance. The rupture strength of the anti-scattering members 46, 48, and 50 was 45 N/25 mm. The elongation rate was 100%. The adhesive strength of the adhesive was 12.5 N/25 mm.

### (Example 26)

A commercially available secondary battery, which was the same as that of Example 25, was prepared. As the anti-scattering members, the same polyvinyl chloride tape and polyvinyl chloride sheets as those of Example 25 were prepared. The same adhesive as that of Example 25 was prepared.

In the arrangement illustrated in FIG. 26, the polyvinyl chloride tape and the polyvinyl chloride sheets were affixed to the upper outer faces of the housing with the adhesive, to form the anti-scattering members. That is, a polyvinyl chloride sheet was provided with holes at positions corresponding to the electrode terminals and the electrolyte injection holes. This sheet was affixed to the top plate in such a manner that the holes faced the electrode terminals and the electrolyte injection holes, to form the anti-scattering member 56. In parallel with this sheet, a polyvinyl chloride tape was affixed to the top plate to form the anti-scattering member 58.

Also, a polyvinyl chloride tape was laterally affixed to the upper end of each of the two narrower side faces 16a of the housing, to form the anti-scattering member 60A. Below this, another polyvinyl chloride tape was laterally affixed in such a manner that a part thereof was disposed on the outer face of the gas-retaining portion 1 a while the remaining part was disposed on the outer face of the liquid retaining portion 1c. In this manner, 47% of the outer faces of the gas-retaining portion were covered.

### (Example 27)

A commercially available secondary battery, which was the same as that of Example 25, was prepared. As the anti-scattering members, the same polyvinyl chloride tape and polyvinyl chloride sheets as those of Example 25 were prepared. The same adhesive as that of Example 25 was prepared.

In the arrangement illustrated in FIG. 27, the polyvinyl chloride tape and the polyvinyl chloride sheets were affixed to the upper outer faces of the housing with the adhesive, to form the anti-scattering members. That is, a polyvinyl chloride sheet, provided with holes at positions corresponding to the electrode terminals and the electrolyte injection holes, was affixed to the top plate in such a manner that the holes faced the electrode terminals and the electrolyte injection holes, to form the anti-scattering member 56. In parallel with this sheet, a polyvinyl chloride tape was affixed to the top plate to form the anti-scattering member 58.

Also, a polyvinyl chloride tape was laterally affixed to the upper end of each of the two wider side faces 16b of the housing, to form the anti-scattering member 62A. Below this, another polyvinyl chloride tape was laterally affixed in such a manner that a part thereof was disposed on the outer face of the gas-retaining portion while the remaining part was disposed on the outer face of the liquid retaining portion, to form the anti-scattering member 62B. In this manner, 55% of the outer faces of the gas-retaining portion were covered.

### (Example 28)

A commercially available secondary battery, which was the same as that of Example 25, was prepared. As the anti-scattering members, the same polyvinyl chloride tape as that of Example 25 was prepared. The same adhesive as that of Example 25 was prepared.

As in the arrangement illustrated in FIG. 28, the polyvinyl chloride tape was affixed to the upper outer faces of the housing with the adhesive, to form the anti-scattering members. That is, seven polyvinyl chloride tapes were affixed so as to extend over the cover and the two wider side faces 16b of the housing. The respective tapes were disposed in parallel at intervals of 20 mm. Also, the respective tapes were disposed so as to avoid the electrode terminals and all the electrolyte injection holes. Both ends of the respective tapes were disposed on the side faces of the case below the electrolyte level. In this manner, 38% of the outer faces of the gas-retaining portion were covered.

### (Example 29)

A commercially available secondary battery, which was the same as that of Example 25, was prepared. As the anti-scattering members, the same polyvinyl chloride tape as that of Example 25 was prepared. The same adhesive as that of Example 25 was prepared.

As in the arrangement illustrated in FIG. 29, the polyvinyl chloride tape was affixed to the upper outer faces of the housing with the adhesive, to form the anti-scattering members. That is, seven polyvinyl chloride tapes were affixed so as to extend over the cover and the two wider side faces 16b of the housing. Also, two polyvinyl chloride tapes were affixed so as to extend over the cover and the two narrower side faces 16a of the housing. Also, another polyvinyl chloride tape was affixed between the electrode terminals.

The respective tapes were disposed in parallel at intervals of 20 mm. Also, the respective tapes were disposed so as to avoid the electrode terminals 34 and 36 and all the electrolyte injection holes. Both ends of the respective tapes were disposed on the side faces of the case below the electrolyte level. In this manner, 48% of the outer faces of the gas-retaining portion were covered.

### (Example 30)

A commercially available secondary battery, which was the same as that of Example 25, was prepared. As the anti-scattering members, the same polyvinyl chloride tape as that of Example 25 was prepared. The same adhesive as that of Example 25 was prepared.

In the arrangement illustrated in FIG. 30, the polyvinyl chloride tape was affixed to the whole outer faces of the housing with the adhesive. That is, one polyvinyl chloride tape was affixed to the cover, the two wider side faces 16b of the housing, and the bottom face in such a manner that it formed a helix in the longitudinal direction of the housing. On one of the side faces 16b of the housing, the tape was disposed slantwise relative to the vertical direction of the housing and in parallel. On the other side face 16b of the housing, the tape was disposed in parallel with the vertical direction of the housing. On the upper face and bottom face of the housing, the tape was also disposed in parallel. The intervals between the tape were 20 mm. Also, the tape was disposed so as to expose the respective terminals 34 and 36 and all the electrolyte injection holes. In this manner, 34% of the outer faces of the gas-retaining portion were covered.

### (Example 31)

A commercially available secondary battery, which was the same as that of Example 25, was prepared. As the anti-scattering members, the same polyvinyl chloride tape as that of Example 25 was prepared. The same adhesive as that of Example 25 was prepared.

In the arrangement illustrated in FIG. 31, the polyvinyl chloride tape was affixed to the outer faces of the housing with the adhesive. That is, seven polyvinyl chloride tapes were affixed so as to extend over the cover and the two wider side faces 16b of the housing. The respective tapes were disposed in parallel so as to meander. The intervals between the tapes were 20 mm. Also, the tapes were disposed so as to expose the respective terminals 34 and 36 and all the electrolyte injection holes. Both ends of the respective tapes were aligned with the lower end of the side faces of the case. In this manner, 34% of the outer faces of the gas-retaining portion were covered.

### (Example 32)

A commercially available secondary battery, which was the same as that of Example 25, was prepared. As the anti-scattering members, the same polyvinyl chloride tape as that of Example 25 was prepared. The same adhesive as that of Example 25 was prepared.

In the arrangement illustrated in FIG. 32, the polyvinyl chloride tape (width: 30 mm) was affixed to the outer faces of the housing with the adhesive. That is, three polyvinyl chloride tapes were bonded so as to extend over the cover and one of the two wider side faces 16b of the housing. Also, three polyvinyl chloride tapes were bonded so as to extend over the cover and the other of the two wider side faces 16b of the housing. The respective tapes were disposed in parallel at intervals of 10 mm. Also, the tape was cut to a suitable shape and affixed so as to cover the upper four corners of the housing.

### (Example 33)

A commercially available secondary battery, which was the same as that of Example 25, was prepared. As the anti-scattering members, 0.7 mm-diameter wires made of stainless steel were prepared. These wires were disposed in the arrangement illustrated in FIG. 33. That is, seven wires were wrapped around the housing one tum in such a manner they were aligned in parallel at predetermined intervals in the longitudinal direction of the housing. Also, four wires were wrapped around the housing one tum in such a manner that they were aligned in parallel at predetermined intervals in the width direction of the housing. Also, two wires were wrapped so as to go around the gas-retaining portion in the horizontal direction. No adhesive was used. The rupture load of the wires was 20 kgf (approximately 196 N).

### (Example 34)

A commercially available secondary battery, which was the same as that of Example 25, was prepared. Two kinds of 5 mm-diameter rubber bands having circumferences of 90 cm and 50 cm were prepared as the anti-scattering members. These rubber bands were disposed in the arrangement illustrated in FIG. 33. That is, seven rubber bands having a circumference of 50 cm were wrapped around the housing one tum in such a manner they were aligned in parallel at predetermined intervals in the longitudinal direction of the housing. Also, four rubber bands having a circumference of 90 cm were wrapped around the housing in such a manner that they were aligned in parallel at predetermined intervals in the width direction of the housing. Also, two rubber bands having a circumference of 50 cm were wrapped so as to go around the gas-retaining portion in the horizontal direction. No adhesive was used. The rupture strength of the rubber bands was 435 N/25 mm. The elongation rate was 150%.

### (Comparative Example 12)

A commercially available secondary battery, which was the same as that of Example 25, was prepared. No anti-scattering member was used.

Three secondary batteries produced in each of Examples 25 to 34 and Comparative Example 12 were subjected to the same rupture test as that of the secondary battery of Example 1, to observe the state of scattering of pieces.
The above results are shown in Table 5.

**[Table 5]**

| | Anti-pieces scattering member | Position | Adhesive Material | Result | |
|---|---|---|---|---|---|
| | | | | Size of | pieces Scattered or not |
| Example 25 | Polyvinyl chloride tape (sheet) | Cover and four side faces | Acrylic resin | No pieces | Not scattered |
| Example 26 | Polyvinyl chloride tape (sheet) | Cover and upper part of two narrower side faces only | Acrylic resin | Medium | Not scattered |
| Example 27 | Polyvinyl chloride tape (sheet) | Cover and upper part of two wider side faces only | Acrylic resin | Small | Not scattered |
| Example 28 | Polyvinyl chloride tape (interval: 20 mm) | Cover and upper part of two wider side faces only | Acrylic resin | Small | Not scattered |
| Example 29 | Polyvinyl chloride tape (interval: 20 mm) | Cover and upper part of four side faces only | Acrylic resin | Small | Not scattered |
| Example 30 | Polyvinyl chloride tape (interval: 20 mm) | In the form of a helix on cover, two wider side faces, and bottom face | Acrylic resin | Small | Not scattered |
| Example 31 | Polyvinyl chloride tape (interval: 20 mm) | Meandering on cover and two wider side faces | Acrylic resin | Small | Not scattered |
| Example 32 | Polyvinyl chloride tape (interva): 10 mm) | Cover, upper part of two wider side faces, and upper four corners | Acrylic resin | Small | Not scattered |
| Example 33 | Wire | Whole housing | None | Medium | Not scattered, or at low speed |
| Example 34 | Rubber band | Whole housing | None | Medium | Not scattered, or at low speed |
| Comp. Example 12 | None | - | None | Large | Scattered |

In Example 25, in which the anti-scattering members 46,48, and 50 comprising the polyvinyl chloride tape were provided for the substantially whole gas retaining portion 1 a, even when the housing ruptured, pieces were not produced, nor did pieces scatter.
Contrary to this, in Comparative Example 12, in which the secondary battery was not provided with any anti-scattering member, when the housing ruptured, various pieces including large and small ones were produced from the cover and the side faces of the battery container, and they scattered at a high speed. Some of the large pieces had areas of more than 49 cm².

Also, in Examples 26 to 34, medium pieces (areas of 9 to 49 cm²) and small pieces (pieces with areas of less than 9 cm²) were produced, but these pieces did not scatter at a high speed.

Examples 26 to 34 are analyzed in more details. In Example 26, only the upper part of each narrower side face 16a (gas-retaining portion) is provided with the anti-scattering member, and the wider side faces 16b are not provided with any. Thus, at the wider side faces 16b, the housing was destroyed, so that medium pieces were produced. However, these pieces were bonded to the anti-scattering members and did not scatter. Also, due to the destruction of the wider side faces 16b of the housing, the energy of the rupture was distributed, and as a result, scattering of electrolyte was suppressed compared with Example 25.

In Example 27, since the wider side faces 16b were provided with the anti-scattering members, only small pieces were produced. In addition, since these pieces were bonded to the anti-scattering members, they did not scatter. From the above results, it was confirmed that the production of pieces can be controlled by adjusting the position of the anti-scattering members. Also, due to the destruction of the narrower side faces 16a of the housing, the energy of the rupture was distributed, and scattering of electrolyte was suppressed compared with Example 25.

In Example 28, the same portion as that of Example 27 is provided with the tapes at predetermined intervals as the anti-scattering members. With respect to scattering of pieces, the result was almost the same as that of Example 27.
Also, in Example 28, the housing cracked between the tapes. As a result, the energy of the rupture was further distributed, and as a result, scattering of electrolyte was further suppressed compared with Example 27.

In Example 29, the same portion as that of Example 25 is provided with the tapes at predetermined intervals as the anti-scattering members. With respect to scattering of pieces, the result was almost the same as that of Example 27.
Also, in Example 29, the housing cracked between the tapes. As a result, the energy of the rupture was distributed compared with Example 25, and scattering of electrolyte was further suppressed compared with Example 25.

In Example 30, the tape was bonded in the form of a helix to the upper face, wider side faces, and bottom face of the housing as the anti-scattering member. With respect to scattering of pieces, the result of Example 30 was almost the same as that of Example 28. That is, in Example 30, the lower side faces and bottom face of the housing (the outer faces of the liquid retaining portion) were also provided with the tape, but this did not particularly increase the effect of preventing scattering of pieces. In view of this result, it can be understood that providing the gas-retaining portion with the anti-scattering member is practically sufficient in preventing scattering of pieces.
However, since the possibility of destruction of the liquid retaining portion is not zero, providing the outer faces of the liquid retaining portion with the anti-scattering member is thought to further improve safety.

In Example 31, the tapes are bonded in a zigzag to the upper face and whole wider side faces of the housing as the anti-scattering members. With respect to scattering of pieces, the result of Example 31 was almost the same as that of Example 28. That is, in Example 31, the lower side faces of the housing (the outer faces of the liquid retaining portion excluding the bottom face) were also provided with the tapes, but this did not particularly increase the effect of preventing scattering of pieces. In view of this result, it can be understood that providing the gas-retaining portion with the anti-scattering members is practically sufficient in preventing scattering of pieces. However, since the possibility of destruction of the liquid retaining portion is not zero, providing the lower side faces of the housing with the anti-scattering members is thought to further improve safety. Also, since the tapes are disposed in a zigzag, they have some slack, thereby making it possible to reduce the impact of rupture.

In Example 32, with respect to scattering of pieces, the result was almost the same as that of Example 29. In Example 32, since the central part of the cover was not provided with any anti-scattering member, there may be a large possibility that the central part may be damaged to produce pieces. However, it is thought that even if pieces are produced, the pieces are unlikely to scatter due to bonding to the anti-scattering members.

Also, the tape used as the anti-scattering member in Example 32 is a wide one with a width of 30 mm, and therefore, it is thought to be more effective in holding pieces.
Also, in Example 32, since the tapes are affixed to the four corners of the gas-retaining portion as the anti-scattering members, the ruggedness of the housing is increased. It is thus thought that even if the housing is destroyed due to rupture, it is possible to prevent the housing from being destroyed more severely than necessary for releasing the inner pressure.

Also, in Examples 33 and 34, in which the wires or rubber bands are used as the anti-scattering members without bonding them to the housing, medium pieces were produced. However, the energy of these pieces was reduced by the anti-pieces scattering members, and they hardly scattered. Also, some of the pieces scattered, but at a very low speed.

In the above-described Embodiments 9 to 17 of the invention and related Examples, it is also possible to provide the anti-scattering members of these embodiments for the battery 10 of FIG 1. This produces a synergistic effect in suppressing scattering, thereby allowing almost complete prevention of scattering of pieces.

In the above description, lead-acid batteries have been described as examples of secondary batteries, but the invention is not limited to lead-acid batteries, and is applicable to, for example, nickel metal-hydride batteries having large capacity (e.g. for electric vehicles) and sealed nickel zinc batteries.

### [Industrial Applicability]

The secondary batteries of the invention are useful in applications in which secondary batteries are used, for example, as the power source for automobiles, the power source for driving various portable electronic devices, and the power source for power storage equipment. In particular, the invention is useful in secondary batteries which are not packed and the safety of which is determined by how they are used by users, for example, lead-acid batteries.

### [Reference Signs List]

| | |
|---|---|
| 1, 1A to 1C | Housing |
| 10, 10A to 10R | Battery |
| 11 | Peripheral Thinned Portion |
| 15 | Central Thinned Portion |
| 18,31,39 | Cover |
| 16,37 | Battery Container |
| 14, 14C, 19, 21, 23, 29, 35, 43, 46, 48, 50, 56, 58, 66, 68, 70, 72, 74 | Anti-Scattering Member |

## Claims

1. A secondary battery comprising:
electrode assemblies each including a positive electrode, a negative electrode, and a separator;
a liquid electrolyte; and
a housing for containing the electrode assemblies and the electrolyte,
wherein the housing has an anti-scattering mechanism that suppresses scattering of pieces of the housing and the electrolyte when the housing ruptures due to an increase of inner pressure,
the housing includes: a rectangular battery container with an opening; a cover for dosing the opening; a liquid retaining portion below the level of the electrolyte, in which the electrolyte is retained; and a gas-retaining portion above the level of the electrolyte, in which a gas is retained, and
the cover has a pair of ends parallel to each other.

2. The secondary battery in accordance with daim 1, wherein the anti-scattering mechanism includes:
a peripheral thinned portion comprising a groove formed in an inner face of the cover near at least one of the pair of ends; and
a central thinned portion comprising a groove formed in an outer face of the cover at a position closer to the center of the cover than the peripheral thinned portion.

3. The secondary battery in accordance with claim 2, wherein the anti-scattering mechanism further includes an anti-scattering member in contact with an outer face of the housing for suppressing scattering of pieces of the housing and the electrolyte.

4. The secondary battery in accordance with claim 3, wherein the anti-scattering member includes a sheet-like substrate and an adhesive layer formed on one face of the substrate, and the substrate is affixed to the outer face of the housing via the adhesive layer.

5. The secondary battery in accordance with claim 4, wherein the substrate is an elastic material.

6. The secondary battery in accordance with daim 3, wherein the anti-scattering member is an elastic endless belt or a wire.

7. The secondary battery in accordance with any one of daims 3 to 6, wherein the anti-scattering member is in contact with at least one of the peripheral thinned portion and the central thinned portion.

8. The secondary battery in accordance with daim 1, wherein the anti-scattering mechanism includes:
a peripheral thinned portion comprising a groove formed in an inner face of the cover near at least one of the pair of ends; and
an anti-scattering member in contact with an outer face of the housing for suppressing scattering of pieces of the housing and the electrolyte.

9. The secondary battery in accordance with daim 8, wherein the anti-scattering member is in contact with the peripheral thinned portion.

10. The secondary battery in accordance with daim 1, wherein the anti-scattering mechanism includes an anti-scattering member that is disposed near the housing for suppressing scattering of pieces of the housing and the electrolyte, and the anti-scattering member has a gas permeable structure that prevents the electrolyte from passing therethrough while allowing a gas to pass therethrough.

11. The secondary battery in accordance with daim 10, wherein the anti-scattering member is disposed near the gas-retaining portion.

12. The secondary battery in accordance with daim 10 or 11, wherein the anti-scattering member is at least one selected from the group consisting of non-woven fabric, woven fabric, net, porous material, and sponge.

13. The secondary battery in accordance with daim 12, wherein the non-woven fabric, woven fabric, net, porous material, or sponge comprises at least one selected from the group consisting of polypropylene, polyethylene, polyamide, polyurethane, and glass fiber.

14. The secondary battery in accordance with daim 12 or 13, wherein the net comprises at least one selected from the group consisting of nickel, copper, and iron.

15. The secondary battery in accordance with any one of daims 12 to 14, wherein the woven fabric or the net has an opening of 0.01 to 3 mm and a fiber diameter of 0.001 to 10 mm.

16. The secondary battery in accordance with any one of claims 10 to 15, wherein the amount of water absorbed by the anti-scattering member is 0.005 g/cm² or more.

17. The secondary battery in accordance with any one of daims 10 to 16, wherein the anti-scattering member has a multi-layer structure.

18. The secondary battery in accordance with claim 17, wherein the anti-scattering member comprises a laminate of a plurality of woven fabrics or nets, and openings of one of the woven fabrics or nets overlap intersections of another one of the woven fabrics or nets.

19. The secondary battery in accordance with any one of daims 10 to 18, wherein the anti-scattering member is bonded to the housing.

20. The secondary battery in accordance with daim 19, wherein the anti-scattering member has a portion bonded to the housing and a portion not bonded to the housing.

21. The secondary battery in accordance with daim 20, wherein the bonded portion is bonded to the liquid retaining portion, and the non-bonded portion faces the gas-retaining portion.

22. The secondary battery in accordance with daim 1, wherein the anti-scattering mechanism includes an anti-scattering member that is disposed near the housing for suppressing scattering of pieces of the housing and the electrolyte, the anti-scattering member includes a sheet-like substrate and an adhesive layer formed on one face of the substrate, and the substrate is affixed to an outer face of the housing via the adhesive layer.

23. The secondary battery in accordance with daim 22, wherein the adhesive strength between the substrate and the housing bonded by the adhesive layer at 23°C is 12.5 to 20 N/25 mm.

24. The secondary battery in accordance with claim 22 or 23, wherein the anti-scattering member has a rate of elongation before rupture of 30 to 125%.

25. The secondary battery in accordance with any one of daims 22 to 24, wherein the anti-scattering member is a belt-like member that is disposed so as to meander.

26. The secondary battery in accordance with any one of daims 22 to 25, wherein at least one of the anti-scattering members is disposed so as to cover the intersection point of an upper face and adjacent two side faces of the housing.

27. The secondary battery in accordance with daim 1, wherein the anti-scattering mechanism includes an anti-scattering member that is disposed near the housing for suppressing scattering of pieces of the housing and the electrolyte, and the anti-scattering member is an elastic endless belt or a wire.

28. The secondary battery in accordance with any one of daims 1 to 27, wherein the positive electrode includes lead dioxide, the negative electrode includes lead, and the electrolyte comprises sulfuric acid.
